# EUROPEAN PATENT APPLICATION

(11) **EP 4 685 456 A1**
(43) Date of publication of application: **28.01.2026**
(21) Application number: 24788246.7
(22) Date of filing: 12.04.2024
(51) Int. Cl.: G01N 1/36, G01N 1/31

(54) **INCUBATION HOLDER, INCUBATION APPARATUS, INCUBATOR, STAINING DEVICE, AND STAINING METHOD**

(30) Priority: 13.04.2023 CN 202310391626; 13.04.2023 CN 202310391619; 13.04.2023 CN 202310391610; 13.04.2023 CN 202310391486; 11.12.2023 CN 202311687881
(71) Applicant: Xiamen Talent Biomedical Technology Co., Ltd., Xiamen, Fujian 361000 (CN)
(72) Inventor: GUO, Jincan, Xiamen, Fujian 361000 (CN); SHI, Jian, Xiamen, Fujian 361000 (CN); SONG, Qimiao, Xiamen, Fujian 361000 (CN); ZHUANG, Jixiang, Xiamen, Fujian 361000 (CN); LIN, Jianhui, Xiamen, Fujian 361000 (CN); MA, Hongliang, Xiamen, Fujian 361000 (CN); KANG, Baojin, Xiamen, Fujian 361000 (CN); LIN, Qinghua, Xiamen, Fujian 361000 (CN)
(74) Representative: ABG Intellectual Property Law, S.L.
(86) International application number: PCT/CN2024/087638
(87) International publication number: WO 2024/213150

(57) **Abstract**

An incubation holder (1), an incubation apparatus, an incubator (200e), a staining device, and a staining method, relating to the technical field of biological detection. The incubation holder (1) comprises a holder assembly (100), and bottom plates (200) and cover plates (300) obliquely arranged on the holder assembly (100); each bottom plate (200) is used for loading a slide (600), and the slide (600) is located between the bottom plate (200) and the corresponding cover plate (300); each cover plate (300) is attached to the corresponding slide (600) for sliding, or the cover plate (300) opens and closes relative to the slide (600) so as to uniformly mix a reagent between the cover plate (300) and the slide (600), such that the detection is faster and more uniform, and the processing efficiency and accuracy of a specimen on the slide (600) are improved.

## Description

### TECHNICAL FIELD

Embodiments of the present invention relate to the technical field of biological detection, and particularly to an incubation holder, an incubation apparatus, an incubator, a staining device, and a staining method.

### BACKGROUND ART

**In** related art, staining or detection often involves static incubation, in which a reagent is added dropwise on a specimen on a slide for static incubation for a certain period of time before washing and adding dropwise a reagent for a next step. In this method of static incubation, a detection substance in the reagent and a detected substance in the specimen bind at a slow speed, reagent concentration and distribution are uneven, and bubbles accumulate locally, thereby affecting detection efficiency, sensitivity, and accuracy.

It should be noted that the information disclosed in the above part of BACKGROUND ART is only for enhancement of understanding of background of the present invention, and thus may include information that does not constitute prior art already known to those ordinarily skilled in the art.

### SUMMARY

An objective of the present invention is to provide an incubation holder, an incubation apparatus, an incubator, a staining device, and a staining method, so as to solve, at least to some extent, the problem of affecting the detection efficiency and accuracy due to prolonged between a reagent and a specimen during static incubation in the related art.

Other features and advantages of the present invention will become obvious through following detailed description, or partially learned from practice of the present invention.

According to one aspect of the present invention, an incubation holder is provided, capable of loading slides, where the incubation holder includes a holder assembly, and bottom plates and cover plates obliquely provided on the holder assembly, where the bottom plates are configured to load the slides located between the bottom plates and the cover plates; and the cover plates slide against the slides, or the cover plates perform opening and closing movement relative to the slides, so as to uniformly mix a reagent between the cover plates and the slides.

According to another aspect of the present invention, an incubation apparatus is provided, including a pedestal, a tilt mechanism, and the above incubation holder, where the tilt mechanism is provided on the pedestal, the tilt mechanism is drivingly connected to the holder assembly, and the tilt mechanism is configured to drive the holder assembly to swing, so as to adjust tilt angles of the bottom plates, the cover plates, and the slides relative to a horizontal plane.

According to a further aspect of the present invention, an incubator is provided, including a housing mechanism, a drive mechanism, and an incubation mechanism, where the housing mechanism is provided with a mounting cavity, the drive mechanism includes a drive member and a follower, where the drive member is drivingly connected to the follower; the incubation mechanism includes a support assembly and the above incubation holder, where the support assembly is connected to inner walls of the mounting cavity; and the support assembly includes an incubation pot provided with an incubation tank, where the incubation holder is provided in the incubation tank, where the cover plates are in transmission connection with the follower; and the drive member is capable of driving the follower to move, so as to drive the cover plates to move relative to the slides.

According to a further aspect of the present invention, a staining device is provided, including a machine bench, the above incubator, and a tilt mechanism, where the tilt mechanism is provided on the machine bench, drivingly connected to the incubator, and capable of driving the incubator to swing downward, so as to decrease tilt angles of the holder assembly, the cover plates, the bottom plates, and the slides relative to a horizontal plane.

According to a further aspect of the present invention, a staining method is provided, applied to the above staining device, including: adding a liquid into gaps between the cover plates and the slides; driving, by the tilt mechanism, the incubator to swing downward to an incubation state, and the tilt mechanism ceasing driving; the cover plates moving relative to the slides, so as to uniformly mix the liquid between the cover plates and the slides; and driving, by the tilt mechanism, the incubator to swing upward until the incubator is parallel to the horizontal plane, and the tilt mechanism ceasing driving.

It should be understood that the above general description and the following detailed description are exemplary and illustrative only, and cannot limit the present invention.

### BRIEF DESCRIPTION OF THE DRAWINGS

Through detailed description of exemplary embodiments with reference to drawings, the above and other features and advantages of the present invention will become more apparent.
FIG. 1 shows a structural schematic diagram of an incubation holder in Embodiment 1 from a first perspective.
FIG. 2 is a structural schematic diagram of the incubation holder in FIG. 1 from a second perspective.
FIG. 3 is a sectional structural schematic diagram of the incubation holder in FIG. 2 in a C-C direction.
FIG. 4 is another sectional structural schematic diagram of the incubation holder in Embodiment 1 in the C-C direction.
FIG. 5 is a sectional structural schematic diagram of the incubation holder in FIG. 2 in a D-D direction.
FIG. 6 is a structural schematic diagram of a cover plate and a slide in FIG. 1 during attachment or separation.
FIG. 7 is a structural schematic diagram of the cover plate and the slide in FIG. 1 during separation.
FIG. 8 is a structural schematic diagram of the cover plate and the slide in FIG. 1 during attachment.
FIG. 9 is a structural schematic diagram of a left side plate and a left drive member in FIG. 1.
FIG. 10 is a structural schematic diagram of the cover plate in FIG. 1.
FIG. 11 is a structural schematic diagram of a first bottom plate in FIG. 1.
FIG. 12 is a structural schematic diagram of a second bottom plate in FIG. 1.
FIG. 13 is a structural schematic diagram of a limiting platform in FIG. 1.
FIG. 14 shows a structural schematic diagram of an incubation holder in Embodiment 2 from a first perspective.
FIG. 15 shows another structural schematic diagram of the incubation holder in Embodiment 2.
FIG. 16 is a structural schematic diagram of straight plates and slides in FIG. 14 during attachment or separation.
FIG. 17 is a structural schematic diagram of the straight plates and the slides in FIG. 14 during attachment.
FIG. 18 is a structural schematic diagram of the straight plates and the slides in FIG. 14 during separation.
FIG. 19 is a structural schematic diagram of upper parts of arc-shaped plates and the slides in FIG. 14 during attachment or separation.
FIG. 20 is a structural schematic diagram of the upper parts of the arc-shaped plates and the slides in FIG. 14 during attachment.
FIG. 21 is a structural schematic diagram of the arc-shaped plates and the slides in FIG. 14 during separation.
FIG. 22 is a structural schematic diagram of the cover plate in FIG. 14.
FIG. 23 is a schematic diagram of a structure of the bottom plate in FIG. 14.
FIG. 24 is another schematic diagram of the structure of the bottom plate in FIG. 14.
FIG. 25 is a schematic diagram of a left side plate and a left drive member in FIG. 14.
FIG. 26 shows a structural schematic diagram of an incubation holder in Embodiment 3.
FIG. 27 shows a structural schematic diagram of another incubation holder in Embodiment 3.
FIG. 28 shows a structural schematic diagram of a further incubation holder in Embodiment 3.
FIG. 29 shows a structural schematic diagram of a further incubation holder in Embodiment 3.
FIG. 30 shows a structural schematic diagram of an incubation holder in Embodiment 4.
FIG. 31 is a structural schematic diagram of a bottom plate in FIG. 30.
FIG. 32 is a structural schematic diagram of cover plates and slides in FIG. 30 during attachment or separation.
FIG. 33 is a structural schematic diagram of the cover plates and the slides in FIG. 30 during attachment.
FIG. 34 shows a structural schematic diagram of an incubator in Embodiment 5.
FIG. 35 is a structural schematic diagram of separation of the incubation holder of an incubation mechanism in FIG. 34.
FIG. 36 is a structural schematic diagram of a housing mechanism and a drive mechanism in FIG. 34.
FIG. 37 is a sectional schematic diagram of an incubator in FIG. 34 from the first perspective.
FIG. 38 is an exploded structural schematic diagram of a support assembly of the incubation mechanism in FIG. 34.
FIG. 39 is a structural schematic diagram of the support assembly and the incubation holder in FIG. 34.
FIG. 40 is a structural schematic diagram of the incubation holder in FIG. 34.
FIG. 41 is a first structural schematic diagram of the incubator in FIG. 34 after removal of a rear plate.
FIG. 42 is a sectional schematic diagram of the incubator in FIG. 34 from a second perspective.
FIG. 43 is a second structural schematic diagram of the incubator in FIG. 34 after removal of the rear plate.
FIG. 44 shows a structural schematic diagram of a staining device in Embodiment 6.
FIG. 45 shows a sectional structural schematic diagram of the incubator and a tilt mechanism in FIG. 44 in an initial state.
FIG. 46 shows a sectional structural schematic diagram of the incubator and the tilt mechanism in FIG. 44 in an incubation state.
FIG. 47 is a sectional structural schematic diagram of the tilt mechanism and an operation platform in FIG. 44.
FIG. 48 shows a structural schematic diagram of another staining device in Embodiment 6.
FIG. 49 shows a sectional structural schematic diagram of the incubator in FIG. 48.
FIG. 50 shows a structural schematic diagram of an incubation apparatus in Embodiment 7.
FIG. 51 is an exploded structural schematic diagram of the incubation apparatus in FIG. 50.
FIG. 52 shows a structural schematic diagram of a further incubation apparatus in Embodiment 7.
FIG. 53 shows a structural schematic diagram of a further incubation apparatus in Embodiment 7.
FIG. 54 shows a structural schematic diagram of an incubation holder in an embodiment of the present invention.
FIG. 55 is a partially exploded structural schematic diagram of the incubation holder in FIG. 54.
FIG. 56 is a sectional structural schematic diagram of the incubation holder in FIG. 54 at a first angle.
FIG. 57 is a sectional structural schematic diagram of the incubation holder in FIG. 54 at a second angle.
FIG. 58 is a structural schematic diagram of the incubation holder in FIG. 54 after removal of a side plate on one side.
FIG. 59 is a structural schematic diagram of a bottom plate, a slide, and an arc-shaped plate in FIG. 58.
FIG. 60 is a structural schematic diagram of the arc-shaped plate in FIG. 58.
FIG. 61 is a partially exploded structural schematic diagram of another incubation holder in FIG. 54.
FIG. 62 is a sectional structural schematic diagram of another incubation holder in FIG. 54 at the first angle.
FIG. 63 is a sectional structural schematic diagram of another incubation holder in FIG. 54 at the second angle.
FIG. 64 is another structural schematic diagram of the incubation holder in FIG. 54 after removal of a side plate on one side.
FIG. 65 is a structural schematic diagram of the bottom plate, the slide, and the arc-shaped plate in FIG. 64.
FIG. 66 is a structural schematic diagram of the arc-shaped plate in FIG. 64.

### DETAILED DESCRIPTION OF EMBODIMENTS

Exemplary embodiments will now be described more thoroughly with reference to drawings. The same reference signs refer to the same or similar structures, and thus detailed description thereof will be omitted.

### Embodiment 1:

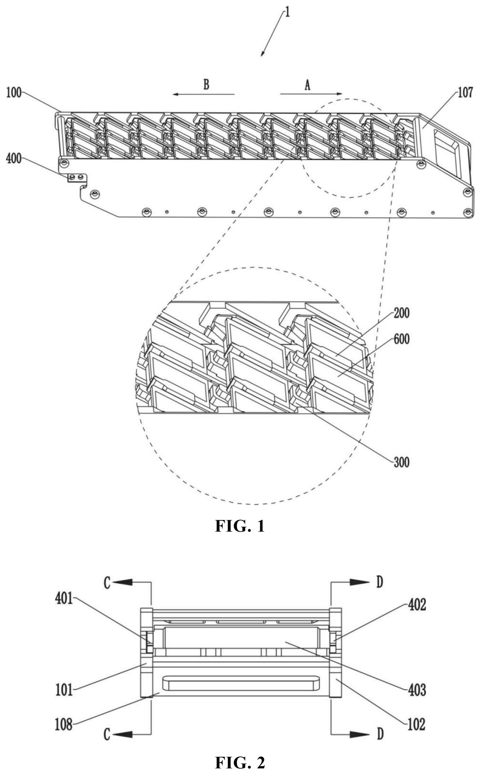

With reference to FIGS. 1-6, the present embodiment provides an incubation holder 1, which can include a holder assembly 100, a pair of pushers 400, and a bottom plate 200 and a cover plate 300 obliquely provided on the holder assembly 100. The holder assembly 100 includes a pair of side plates. The bottom plate 200 is configured to load a slide 600, and an upper surface of the slide 600 is configured to dispose a specimen and/or a reagent. The cover plate 300 is provided above the bottom plate 200, and the slide 600 is located between the bottom plate 200 and the cover plate 300.

In the embodiment, a plurality of bottom plates 200 can be provided on the holder assembly 100, and each bottom plate 200 is capable of loading one or more slides 600, so as to simultaneously perform staining and detection on specimens on multiple slides, thus effectively improving processing efficiency. Each bottom plate 200 is correspondingly provided with one cover plate 300.

In the embodiment, the pair of pushers 400 is slidably connected to the pair of side plates, respectively, and the bottom plates 200 and the cover plates 300 are connected between the pair of side plates. The bottom plates 200 are connected to the side plates in a fixed or detachable manner. Each cover plate 300 is provided with protruding portions 301 on two sides, and two protruding portions 301 are detachably connected to the pair of pushers 400, respectively.

Each side plate is provided with limiting slots 103, with each limiting slot 103 being provided with a first support surface 104. Each pusher 400 is provided with movement slots 404, with each movement slot 404 being provided with a second support surface 405. Respective first support surface 104 and second support surface 405 are provided crossed, and the protruding portion 301 can be supported at an intersection of the first support surface 104 and the second support surface 405. The limiting slot 103 is configured to restrict a distance of reciprocation of the protruding portion 301 along a bottom of the first support surface 104 to a top of the first support surface 104. In the embodiment, the protruding portion 301 is provided on an upper part of the cover plate 300.

With reference to FIGS. 1-3, FIG. 5, and FIG. 9, the holder assembly 100 includes a first connecting portion 107 and a second connecting portion 108 respectively connected between the pair of side plates, where the first connecting portion 107 and the second connecting portion 108 are provided at a front end and a tail end of the side plates, respectively. The first connecting portion 107 and the second connecting portion 108 can be connecting plates, connecting rods, etc., configured to stabilize the side plates. The side plates can include a left side plate 101 and a right side plate 102 arranged symmetrically. The limiting slots 103 in the left side plate 101 and the right side plate 102 can be configured as linear slots. The first support surface 104 and the upper surface of the loaded slide 600 are provided crossed.

With reference to FIGS. 2-5 and FIG. 8-9, the pushers 400 can be slide rods or slide plates, and the pushers 400 include a left pusher 401 and a right pusher 402 arranged bilaterally symmetrically, where the left pusher 401 is slidably connected to the left side plate 101, and the right pusher 402 is slidably connected to the right side plate 102. Specifically, the left side plate 101 and the right side plate 102 are each provided with a sliding slot 105, where the left pusher 401 is provided in the sliding slot 105 in the left side plate 101, and the right pusher 402 is provided in the sliding slot 105 in the right side plate 102. The pushers 400 can reciprocate in the sliding slots 105.

In the embodiment, the sliding slots 105 can be provided in inner sides of the side plates, with each extending from one end of corresponding side plate to the other end. The sliding slots 105 are adapted to the pushers 400, and the left pusher 401 and the right pusher 402 can reciprocate synchronously within the sliding slots 105 in a first direction A or a second direction B. In other embodiments, the sliding slots 105 can also be provided in outer sides of the side plates.

The left side plate 101 and the right side plate 102 are further provided with guiding slots 106, where an opening of each guiding slot 106 extends from a top of the side plates to corresponding limiting slot 103, the guiding slot 106 communicates with the limiting slot 103, and the protruding portion 301 can enter or exit the limiting slot 103 through the guiding slot 106, thus facilitating removal and placement of the cover plate 300.

The left pusher 401 and the right pusher 402 are both provided with the movement slots 404, and the movement slots 404 on two sides are bilaterally symmetrical. Each movement slot 404 is a trapezoidal-like space, and corresponding protruding portion 301 can move within the space. Herein, each limiting slot 103 is linear, two parallel inner walls of the limiting slot 103 restrict movement of the protruding portion 301, so that the protruding portion 301 moves linearly within the slot, abutting against the first support surface 104 all the time. The protruding portion 301 can move freely within the movement slot 404, and can be detached from the second support surface 405.

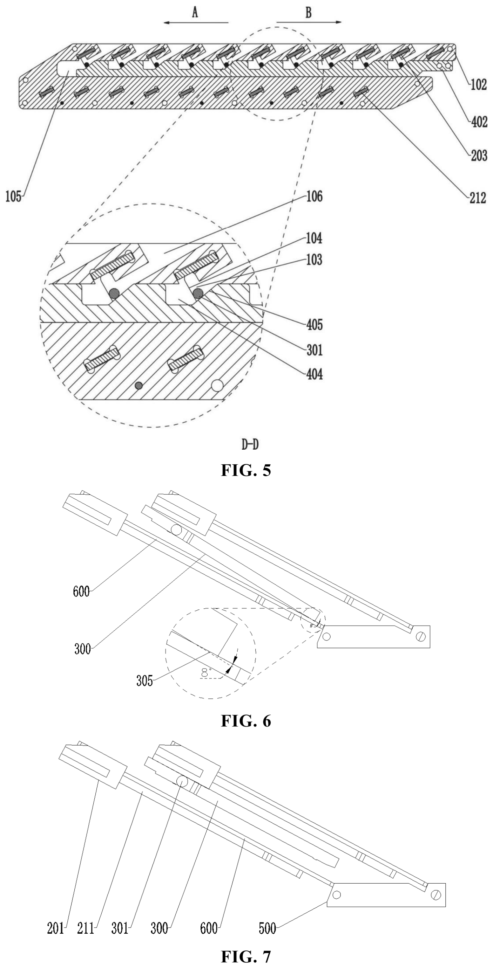

With reference to FIG. 6, FIG. 8, and FIG. 10, a second isolation portion 302 and a support platform 303 are provided on a lower surface of each cover plate 300. The support platform 303 protrudes from the lower surface of the cover plate 300. The second isolation portion 302 is configured to partition reagents on two adjacent slides 600. For example, each cover plate 300 is of a specification capable of covering three slides 600, the cover plate 300 is provided with two second isolation portions 302, and the second isolation portions 302 can be rectangular recesses. Three contact surfaces between the cover plate 300 and three slides 600 are isolated by the second isolation portions 302, thus preventing cross contamination caused by reagent flow between adjacent slides 600.

In the embodiment, the support platform 303 protrudes from the lower surface of the cover plate 300 by a height of 0.01-2 mm. The support platform 303 can be provided at four corners of each contact surface of the cover plate 300. A cross section of the support platforms 303 can be square, circular, bar-shaped, irregular, or other shapes. When the cover plate 300 is attached to the slides 600, capillary gaps 304 are formed between the contact surface and the slides 600. When the upper part of the cover plate 300 is gradually separated from the slides 600, the capillary gaps 304 are opened, capillary phenomenon disappears, and reagents originally retained in the capillary gaps 304 flow downward, and accumulate at a junction between the slides 600 and the bottom of the cover plate 300 under a gravitational effect. When the upper part of the cover plate 300 and the slides 600 are gradually brought together and attached, the capillary gaps 304 therebetween are formed again, and due to a capillary siphon action, the reagents at the bottom gradually flow from the lower part to the upper part again, and fill up the capillary gaps 304.

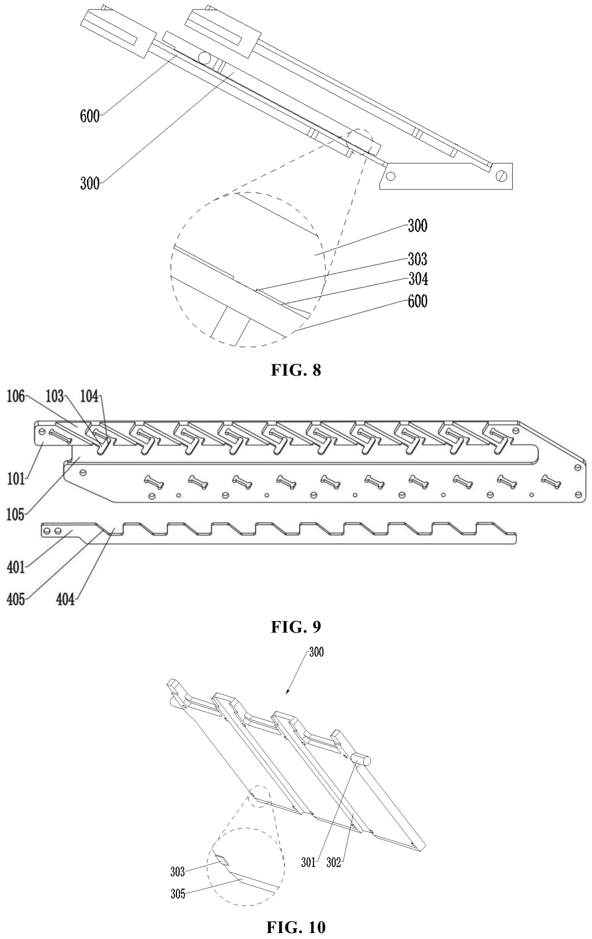

With reference to FIG. 6 and FIG. 10, the bottom of each cover plate 300 is provided with an inclined surface 305, where the inclined surface 305 is provided at an angle to the lower surface of the cover plate 300. An included angle between the inclined surface 305 and the lower surface of the cover plate 300 ranges from 1° to 25°, further preferably ranges from 5° to 10°, and even more preferably is 8°. When there is an opening between the slide 600 and the cover plate 300 and the two are not separated, the inclined surface 305 at bottom is attached to the slide 600, thus preventing outflow of the reagent from the bottoms of the slide 600 and the cover plate 300, and avoiding reagent loss. It should be noted that the included angle between the inclined surface 305 and the lower surface of the cover plate 300 can be of other degrees.

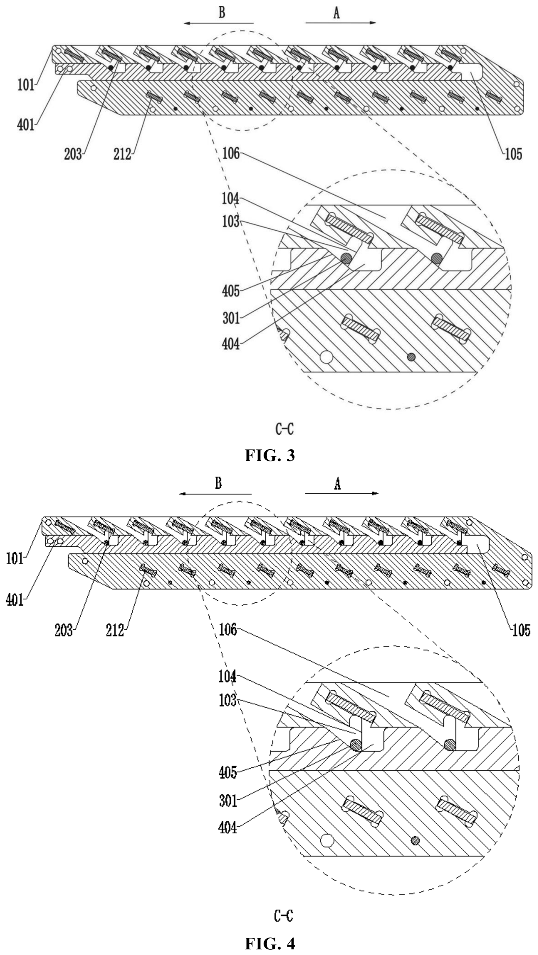

With reference to FIG. 3, FIG. 5, FIG. 7, FIG. 11, and FIG. 12, each bottom plate 200 includes a first bottom plate 201 and a second bottom plate 211 plugged to each other. A lower surface of the first bottom plate 201 is a limiting surface 204, and third connecting portions 203 are provided at two sides thereof, where the third connecting portions 203 are connected to the upper parts of the side plates. The second bottom plate 211 is provided with fourth connecting portions 212 at two sides, where the fourth connecting portions 212 are connected to the bottoms of the side plates. The upper part of each cover plate 300 is provided below the limiting surface 204 of adjacent bottom plate, and the cover plate 300 can abut against the limiting surface 204. An interval between each two adjacent first bottom plates 201 is equal. The limiting surface 204 is configured to constrain a size of the opening between the cover plate 300 and slide 600.

The bottom of each cover plate 300 is hung downward under gravity and partially attached to the slide 600. When the protruding portion 301 moves along the bottom of the first support surface 104 to the top of the first support surface 104, due to constraint of the limiting surface 204, the opening between the cover plate 300 and the slide 600 cannot be further increased. The cover plate 300 is subjected to both a downward pressure from the limiting surface 204 and an upward supporting force from the first support surface 104 and the second support surface 405, and under a combined action of these forces, the bottom of the cover plate 300 is completely pried up, resulting in complete separation of the cover plate 300 from the slide 600, in which case most of the reagent flows away, facilitating washing and replacement of fresh reagent.

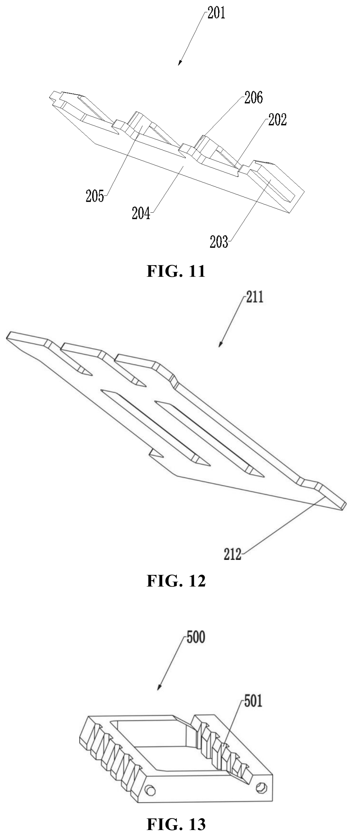

With reference to FIG. 11, an upper surface of the first bottom plate 201 can be provided with receiving grooves 202 and first isolation portions 206, where the first isolation portions 206 partition two adjacent receiving grooves 202. The first isolation portions 206 enable each receiving groove 202 to be relatively independent, and isolate adjacent slides 600, thus preventing cross contamination between specimens or reagents on adjacent slides 600. In the embodiment, each first isolation portion 206 is provided with a guiding surface 205 at an insertion opening for the slide 600, so as to facilitate insertion of the slide 600 into the receiving groove 202.

With reference to FIG. 2, a fifth connecting portion 403 is connected between the pair of pushers 400 for connecting to an external drive device. The fifth connecting portion 403 is driven to move by the drive device, and drive the pair of pushers 400 to synchronously move in the first direction A or the second direction B as shown in FIG. 1.

With reference to FIG. 7 and FIG. 13, the incubation holder 1 further can include a limiting platform 500 for holding the slides 600. The limiting platform 500 is provided below the bottom plates 200 and connected between the pair of side plates, so as to prevent fall-off of the slides 600 from the bottoms. The limiting platform 500 is provided with drainage grooves 501 at positions in contact with the slides 600, so as to facilitate guidance of waste liquids during washing.

With reference to FIG. 6 and FIG. 7, when the pushers 400 are driven by an external force to slide in the first direction A as shown in FIG. 1, the protruding portions 301 are forced to move upward along the intersections of respective first support surfaces 104 and second support surfaces 405, thus gradually increasing the openings between the cover plates 300 and the slides 600. If the reagents need to be washed or released, the pushers 400 slide further in the first direction A, the top of each cover plate 300 will be subjected to a downward pressure from the lower surface of adjacent bottom plate 200, and the bottom of the cover plate 300 will be pried up, thus leading to separation of both the top of the cover plate 300 and the bottom of the cover plate 300 from the slide 600.

With reference to FIG. 6 and FIG. 8, when the pushers 400 are driven by an external force to slide in the first direction B as shown in FIG. 1, the protruding portions 301 are forced to move downward along the intersections of respective first support surfaces 104 and second support surfaces 405, thus gradually decreasing the openings between the cover plates 300 and the slides 600, and finally achieving an attachment state of the cover plates 300 and the slides 600. If one of the cover plates becomes stuck, the protruding portions 301 of this cover plate are disengaged from respective second support surfaces 405 and located at a certain position within the movement slots 404, while other unstuck cover plates 300 continue to move normally, thus preventing the movement of other cover plates from being affected if a certain cover plate 300 is stuck, and also avoiding a problem of fracture of the protruding portions 301 caused by further movement of the pushers 400. The pushers 400 can simultaneously drive movement of multiple cover plates 300, and the movement of respective cover plates 300 is independent of each other.

In the present embodiment, the pushers 400 drive the cover plates 300 to move, and cause the cover plates 300 to be gradually attached to or separated from the slides 600, thus resulting in more uniform reagent mixing across various areas of each slide 600, and quicker binding between a detection substance in the reagent and a detected substance in the specimen, thereby effectively improving the efficiency and accuracy of specimen processing.

### Embodiment 2:

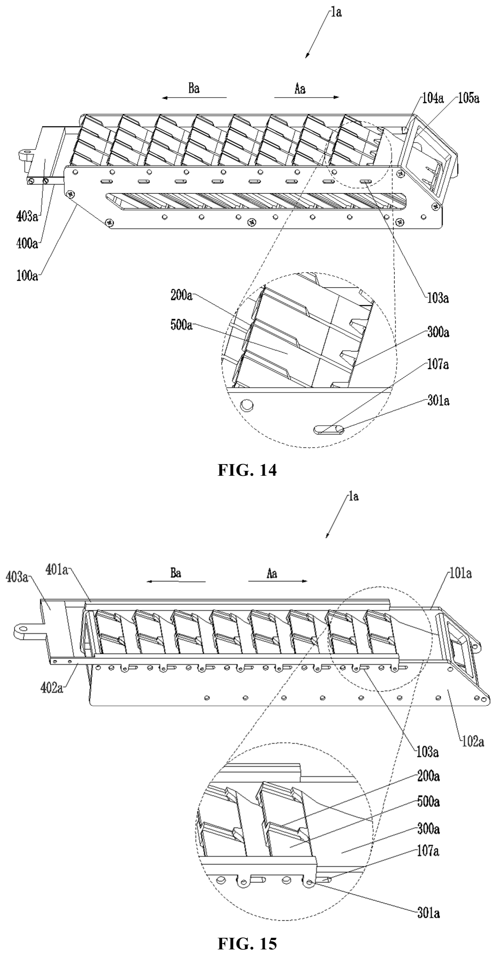

With reference to FIG. 14 to FIG. 18, the present embodiment provides an incubation holder 1a, including a holder assembly 100a, a pair of pushers 400a, bottom plates 200a, and cover plates 300a. Reference can be made to Embodiment 1 for connection relationship between these components and other parts not mentioned.

In an embodiment, the holder assembly 400a includes a pair of side plates. The pair of pushers 400a is slidably connected to the pair of side plates, respectively. The bottom plates 200a and the cover plates 300a are both connected between the pair of side plates. Each side plate is provided with limiting slots 103a. Each cover plate 300a is provided with protruding portions 301a on two sides, and the protruding portions 301a on the two sides are pivotally connected to the pair of pushers 400a, respectively. The limiting slots 103a are configured to restrict distances of reciprocation of the protruding portions 301a. In the embodiment, the protruding portion 301 is provided on an upper part of the cover plate 300.

The holder assembly 100a includes a first connecting portion 105a and a second connecting portion 106a. The side plates include a left side plate 101a and a right side plate 102a arranged symmetrically. For the left side plate 101a, the right side plate 102a, the first connecting portion 105a, and the second connecting portion 106a, reference is made to description in Embodiment 1 (the left side plate 101, the right side plate 102, the first connecting portion 107, and the second connecting portion 108), which is not be repeated herein.

The left side plate 101a and the right side plate 102a are both provided with the limiting slots 103a, and the bottom plates 200a are perpendicularly connected to the left side plate 101a and the right side plate 102a. Each limiting slot 103a has two inner side walls 107a arranged in parallel to each other, and the inner side walls 107a are arranged crossed with an upper surface of the bottom plate 200a.

With reference to FIG. 14, FIG. 16, FIG. 22, and FIG. 24, the protruding portions 301a can be rods extending outwards, the limiting slots 103a are linear, and respective linear limiting slots 103a have an equal length and a width slightly greater than a diameter of the protruding portions 301a, so as to be capable of restricting a movement track of the protruding portions 301a.

Each cover plate 300a is provided with a second isolation portion 302a, a support platform 303a, and an inclined surface 305a. For the second isolation portion 302a, the support platform 303a, and the inclined surface 305a, reference is made to the description in Embodiment 1 (the second isolation portion 302, the support platform 303, and the inclined surface 305), which is not be repeated herein.

With reference to FIG. 14 and FIG. 15, the pushers 400a can be slide rods or slide plates, and the pair of pushers 400a include a left pusher 401a and a right pusher 402a arranged symmetrically, where the left pusher 401a is slidably connected to the left side plate 101a, and the right pusher 402a is slidably connected to the right side plate 102a. Each pusher 400a is connected to the protruding portion 301a on one side of each cover plate 300a.

A fourth connecting portion 403a is provided between tail ends of the left pusher 401a and the right pusher 402a, where the fourth connecting portion 403a can be a connecting rod or a connecting plate. The fourth connecting portion 403a is connected to an external drive device, and the fourth connecting portion 403a, when driven by the drive device, is capable of driving the left pusher 401a and the right pusher 402a to synchronously move in a first direction Aa or a second direction Ba as shown in FIG. 14.

With reference to FIG. 14, FIG. 15, and FIG. 25, the left pusher 401a and the right pusher 402a are both provided with fifth connecting portions 404a, where the fifth connecting portions 404a can be through holes. The protruding portions 301a are pivotally connected to the fifth connecting portions 404a. The fifth connecting portions 404a on the left pusher 401a and the right pusher 402a are arranged symmetrically, so that individual cover plates 300a are parallel to each other, and a plurality of cover plates 300a, when driven by the pushers 400a, are capable of moving synchronously in a coordinated manner.

With reference to FIG. 14, a slidable connection between the pushers 400a and the holder assembly 100a can be realized by providing a sliding slot 104a in an inner side of each side plate, allowing the pushers 400a to reciprocate in respective sliding slots 104a in the first direction Aa as shown in FIG. 14. It should be noted that, it is also feasible to provide the sliding slot 104a in an outer side of each side plate. The sliding slot 104a extends from one end of the side plate to the other end of the side plate. The sliding slots 104a are adapted to the pushers 400a, allowing the left pusher 401a and the right pusher 402a to synchronously slide in respective sliding slots 104a in the first direction Aa or the second direction Ba as shown in FIG. 14. With reference to FIG. 15, without providing the sliding slots 104a in the side plates, the pushers 400a also can be provided on tops of the side plates, so that the pushers 400a are capable of reciprocating on the tops of the side plates.

With reference to FIG. 14, FIG. 16, and FIG. 23 to FIG. 25, the incubation holder 1a is provided with at least two bottom plates 200a, and each bottom plate 200a is capable of loading one or more slides 500a, so as to simultaneously perform staining or detection on a plurality of slides 500a, thereby effectively improving processing efficiency.

Each bottom plate 200a is provided with a plurality of first isolation portions 203a and a plurality of receiving grooves 201a. For the first isolation portions 203a and the plurality of receiving grooves 201a, reference is made to the description in Embodiment 1 (the first isolation portions 206 and the receiving grooves 202), which is not repeated herein.

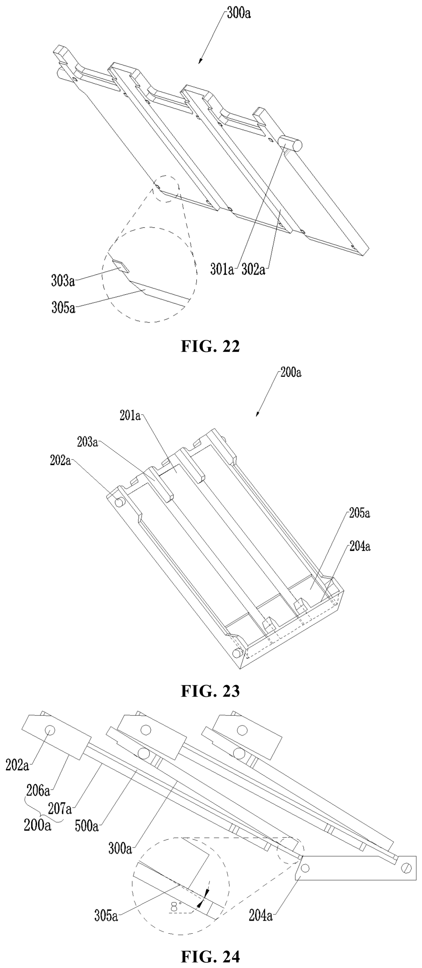

With reference to FIG. 23, each bottom plate 200a can be integrally formed. Third connecting portions 202a are provided at a top end and a bottom end of the bottom plate 200a on two sides, respectively. The third connecting portions 202a at the top end of the bottom plate 200a are connected to tops of the left side plate 101a and the right side plate 102a, respectively. The third connecting portions 202a at the bottom end of the bottom plate 200a are connected to bottoms of the left side plate 101a and the right side plate 102a, respectively. Two adjacent bottom plates 200a are parallel to each other.

Herein, a limiting platform 204a is provided at the bottom of the bottom plate 200a. The limiting platform 204a is configured to support the slide 500a inserted into the bottom plate 200a, and the limiting platform 204a is capable of preventing fall-off of the slide 500a from the bottom of the bottom plate 200a. A drainage groove 205a is provided at the bottom of the bottom plate 200a, where the drainage groove 205a is hollow, and when washing the cover plate 300a or the slide 500a, waste water can flow out from the drainage groove 205a at the bottom of the bottom plate 200a.

With reference to FIG. 24, the bottom plate 200a may also be detachable, and includes a first bottom plate 206a and a second bottom plate 207a. Then, the limiting platform 204a is provided at the bottom of the holder assembly 100a, and two sides of the limiting platform 204a are connected to bottoms of the left side plate 101a and the right side plate 102a, respectively. For the first bottom plate 206a, the second bottom plate 207a, and the limiting platform 204a, reference is made to the description in Embodiment 1 (the first bottom plate 201, the second bottom plate 211, and the limiting platform 500), which is not be repeated herein.

When a reagent is added dropwise to the bottom plate 200a arranged obliquely, the reagent can flow to an abutting area between the cover plate 300a and the slide 500a. In a process of attachment and separation between the cover plate 300a and the slide 500a, the cover plate 300a and the slide 500a can collectively mix the reagent, so as to accelerate a reaction between the reagent and a specimen, resulting in a better staining or detection effect. Moreover, the obliquely arranged bottom plate 200a also facilitates obliquely downward flow of water under a gravitational effect during washing of the slide 500a and the cover plate 300a with clean water.

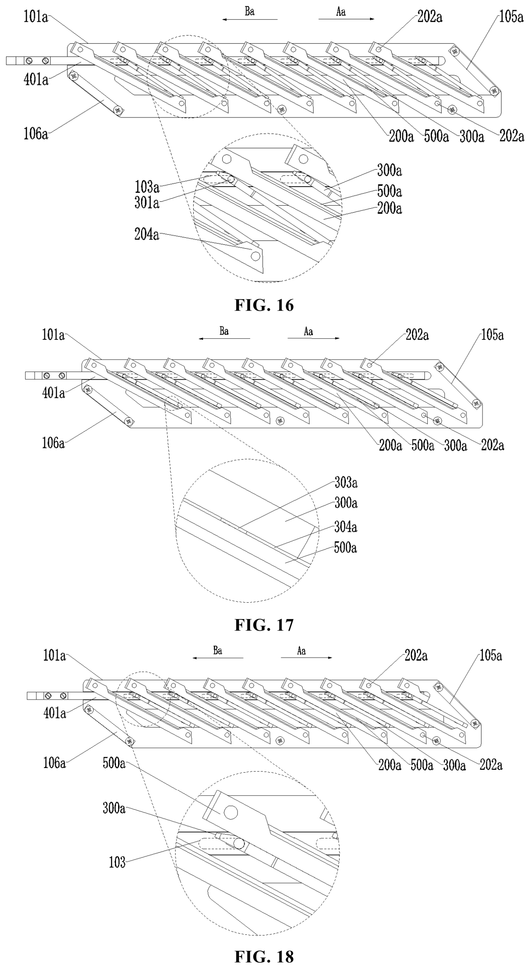

With reference to FIG. 16 to FIG. 21, each cover plate 300a includes a straight plate or an arc-shaped plate, where a lower surface of the straight plate is a flat surface, and a lower surface of the arc-shaped plate is an arc-shaped surface. Before the straight plate or the arc-shaped plate is completely separated from the slide 500a, the straight plate or the arc-shaped plate is partially attached to the slide 500a all the time.

The protruding portions 301a on the upper part of the cover plate 300a including the straight plate are supported by the fifth connecting portions 404a and the limiting slots 103a, while the lower part of the cover plate 300a including the straight plate is not connected to other components. The lower part of the cover plate 300a including the straight plate is hung downward under the gravitational effect, and partially abuts against the slide 500a.

The protruding portions 301a on the upper part of the cover plate 300a including the arc-shaped plate are supported by the fifth connecting portions 404a and the limiting slots 103a, while the lower part of the cover plate 300a including the arc-shaped plate is not connected to other components. The lower part of the cover plate 300a including the arc-shaped plate is hung downward under the gravitational effect, and due to an arc shape of the arc-shaped plate, a middle or lower part of the arc-shaped plate abuts against the slide 500a.

With reference to FIG. 16 and FIG. 18, when the cover plate 300a is a straight plate, the pushers 400a are driven by an external force to slide in the second direction Ba, and the protruding portions 301a are forced to move along second ends of the limiting slots 103a towards first ends, so as to reduce an opening between the cover plate 300a and the slide 500a, and finally achieve a state in which the cover plate 300a abuts against the slide 500a.

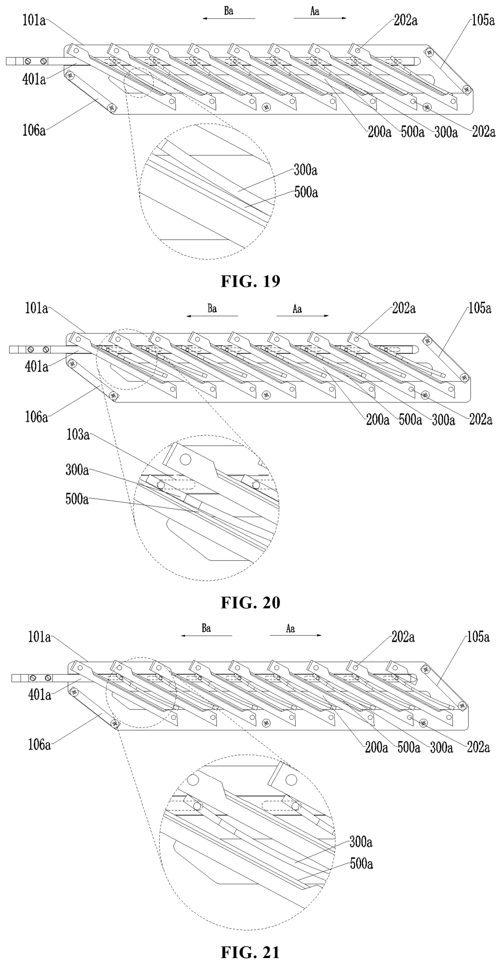

With reference to FIG. 16 and FIG. 19, when the cover plate 300a is a straight plate, the pushers 400a are driven by an external force to slide in the first direction Aa, and the protruding portions 301a are forced to move along the first ends of the limiting slots 103a towards the second ends, so as to gradually increase the opening between the cover plate 300a and the slide 500a. If the reagent needs to be washed or released, the pushers 400a further slide in the first direction Aa, the top of the cover plate 300a will be subjected to a downward pressure from a lower surface of adjacent bottom plate 200a, and the bottom of the cover plate 300a will be pried up, resulting in separation of both the top of the cover plate 300a and the bottom of the cover plate 300a from the slide 500a.

With reference to FIG. 19 and FIG. 20, when the cover plate 300a is an arc-shaped plate, the pushers 400a are driven by an external force to slide in the second direction Ba, the protruding portions 301a are forced to move along the second ends of the limiting slots 103a towards the first ends, the upper part of the cover plate 300a is gradually attached to the slide 500a, while the lower part of the cover plate 300a performs an opposite separation movement in a seesaw-like manner, finally achieving a state in which the upper part of the cover plate 300a is attached to the slide 500a.

With reference to FIG. 19 and FIG. 21, when the cover plate 300a is an arc-shaped plate, the pushers 400a are driven by an external force to slide in the first direction Aa, the protruding portions 301a are forced to move along the first ends of the limiting slots 103a towards the second ends, the upper part of the cover plate 300a is gradually separated from the slide 500a, while the lower part of the cover plate 300a performs an opposite attachment movement in a seesaw-like manner, and the lower part of the cover plate 300a is gradually attached to the slide 500a. If the reagent needs to be washed or released, the pushers 400a at this point further slide in the first direction Aa, the top of the cover plate 300a will be subjected to a downward pressure from a lower surface of adjacent bottom plate 200a, and the bottom of the cover plate 300a will be pried up, thus resulting in separation of both the top of the cover plate 300a and the bottom of the cover plate 300a from the slide 500a.

In the present embodiment, if the cover plate 300a including the straight plate is adopted, when both the upper part and the lower part of the cover plate 300a are attached to the slide 500a, a capillary gap 304a formed will relatively completely cover the slide 500a, and the reagent will fill up the capillary gap 304a under a capillary siphon action, which facilitates staining and detection for a specimen on the slide 500a in a relatively large range.

If the cover plate 300a including the arc-shaped plate is adopted, when the upper part of the cover plate 300a is separated from or attached to the slide 500a, the lower part of the arc-shaped plate will be oppositely attached to or separated from the slide 500a in the seesaw-like manner, the cover plate 300a and the slide 500a are only partially attached all the time, thus the capillary gap 304a is formed only in a local area, and the capillary gap 304a is filled up with the reagent due to siphoning. Use of the arc-shaped plate is more beneficial to promote a large-scale reciprocation of the reagent on the slide 500a, and enhance a dynamic incubation effect, so that an incubation period can be shortened, and detection sensitivity is relatively high. Furthermore, by controlling the reciprocation distance of the pushers by an external force, a range of attachment between the arc-shaped plate and the slide 500a can be controlled, thus reducing an area covered by the reagent on the slide 500a, reducing reagent consumption, and saving costs particularly when performing, for example, fluorescence *in situ* hybridization or using other expensive reagents.

### Embodiment 3:

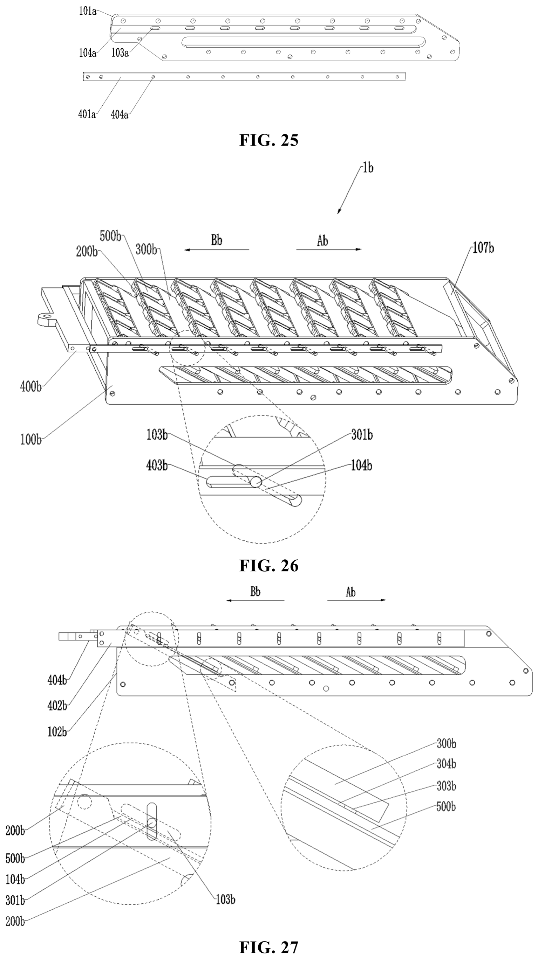

With reference to FIG. 26 to FIG. 28, the present embodiment provides an incubation holder 1b, which can include a holder assembly 100b, bottom plates 200b, cover plates 300b, and pushers 400b. For an assembly relationship between the three and slides, reference is made to Embodiment 1. Herein, the cover plates 300b are capable of moving relative to the bottom plates 200b, and the cover plates 300b slide against the slides 600b so as to uniformly mix reagents between the cover plates 300b and the slides 600b.

The holder assembly 100b includes side plates, a first connecting portion 105b, and a second connecting portion 106b. The side plates include a left side plate 101b and a right side plate 102b arranged symmetrically. For the left side plate 101b, the right side plate 102b, the first connecting portion 105b, and the second connecting portion 106b, reference is made to description in Embodiment 1 (the left side plate 101, the right side plate 102, the first connecting portion 107, and the second connecting portion 108), which is not be repeated herein.

Each side plate is provided with first limiting slots 103b, with each first limiting slot 103b having two inner side walls 104b arranged in parallel. Each cover plate 300b is provided with protruding portions 301b on two sides, and the protruding portions 301b slide in respective first limiting slots 103b. The protruding portions 301b on the two sides are pivotally connected to a pair of pushers 400b, respectively. The cover plates 300b and the slides 600b are provided to be attached.

Each bottom plate 200b can be integrally formed. For a structure of the bottom plate 200b, reference is made to description in Embodiment 2, which is not repeated herein.

The left side plate 101b and the right side plate 102b are both provided with the first limiting slots 103b. The first limiting slots 103b can be configured as linear slots. The first limiting slots 103a have an equal length and a width slightly greater than a diameter of the protruding portions 301b, so as to be capable of restricting a movement track of the protruding portions 301a. Each first limiting slot 103b has two inner side walls 104b arranged in parallel, and the inner side walls 104b are arranged in parallel to an upper surface of the bottom plate 200b. Herein, the width of the first limiting slots 103b refers to a distance between two parallel inner side walls 104b. A first end of each first limiting slot 103b is closer to a top of the bottom plate 200b than a second end.

A distance between the lower inner side wall 104b of each first limiting slot 103b and the upper surface of the bottom plate 200b is slightly greater than a thickness of the slide 500b. In this way, the slide 500b can be located between the upper surface of the bottom plate 200b and the lower surface of the cover plate 300b.

The protruding portions 301b can be outwardly extending rods, the cover plates 300b are straight plates. For the cover plates 300b, reference can be made to the description in Embodiment 1 (the cover plates 300), which is not be repeated herein. Each cover plate 300b is provided with a second isolation portion, a support platform 303b, a capillary gap 304b, and an inclined surface. For the second isolation portion, the support platform, and the inclined surface, reference is made to the description in Embodiment 1 (the second isolation portion 302, the support platform 303, the capillary gap 303, and the inclined surface 305), which is not be repeated herein.

The pushers 400b can be slide rods or slide plates. The pair of pushers 400b includes a left pusher 401b and a right pusher 402b arranged bilaterally symmetrically, where the left pusher 401b is slidably connected to the left side plate 101b, and the right pusher 402b is slidably connected to the right side plate 102b. Herein, the slidable connection between the pushers 400b and the holder assembly 100b can be realized by providing sliding slots 105b in an outer side or an inner side of each side plate, allowing the pushers 400b to reciprocate in respective sliding slots 105b.

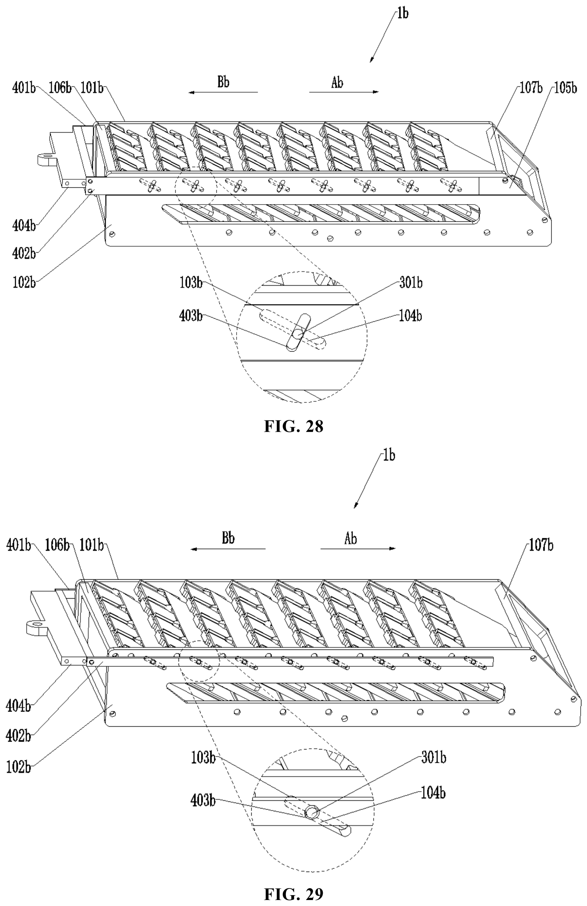

With reference to FIG. 28, each pusher 400b is provided with second limiting slots 403b, each second limiting slot 403b is connected with the protruding portion 301b of the cover plate 300b, and a fourth connecting portion 404b is provided between the pair of pushers 400b. The fourth connecting portion 404b can be a connecting rod or a connecting plate, and connected to the same end of the left pusher 401b and the right pusher 402b through screws. The fourth connecting portion 404b can be connected to an external drive device, and the fourth connecting portion 404b, when driven by the drive device, is capable of driving the left pusher 401b and the right pusher 402b to synchronously move in a first direction Ab or a second direction Bb as shown in FIG. 26.

With reference to FIG. 26, the second limiting slots 403b can be linear limiting slots, the second limiting slots 403b have a width slightly greater than the diameter of the protruding portions 301b, and the protruding portions 301b are capable of moving in respective second limiting slots 403b. With reference to FIG. 29, each second limiting slots 403b can also be configured as a circular hole, with a diameter slightly greater than that of the protruding portion 301b, and the protruding portions 301b are capable of rotating in respective circular holes.

With reference to FIG. 26 to FIG. 29, a length direction of the first limiting slots 103b and a length direction of the second limiting slots 403b are provided crossed, and each protruding portion 301b is simultaneously located in corresponding first limiting slot 103b and second limiting slot 403b. Herein, the first end of each first limiting slot 103b is closer to the top of corresponding bottom plate 200b than a second end, and the second end thereof is closer to the bottom of the bottom plate 200b than the first end.

The second limiting slots 403b are perpendicularly or obliquely arranged. A first end of each second limiting slot 403b is closer to a top of corresponding holder assembly 100b than a second end, and the second end thereof is closer to a bottom of the holder assembly 100b than the first end. Certainly, the second limiting slots 403b can also be horizontally arranged, in which case the first end of each second limiting slot 403b is closer to corresponding first connecting portion 106b than the second end, and the second end thereof is closer to the second connecting portion 107b than the first end.

When the pushers 400b slide in the first direction Ab, the inner side walls 104b of the second limiting slots 403b push the protruding portions 301b, such that the protruding portions 301b move from the first ends to the second ends along the first limiting slots 103b. The cover plates 300b slide downward against the slides 500b until the protruding portions 301b move to the second ends of the first limiting slots 103b and/or the second ends of the second limiting slots 403b.

When the pushers 400b slide in the second direction Bb, the inner side walls 104b of the second limiting slots 403b push the protruding portions 301b, such that the protruding portions 301b move from the second ends to the first ends along the first limiting slots 103b. The cover plates 300b slide upwards against the slides 500b until the protruding portions 301b move to the first ends of the first limiting slots 103b and/or the first ends of the second limiting slots 403b.

In the present embodiment, by driving the cover plates 300b to move by the pushers 400b, the cover plates 300b attached to the slides 600b can reciprocatingly slide along a length direction of the slides 600b. During this process, specimens and reagents located between respective cover plates 300b and slides 600b are uniformly stirred and mixed, allowing rapid and thorough reaction between the specimens and the reagents, avoiding occurrences of non-uniform concentration of the reagents, bubble accumulation, and prolonged standing, thereby improving efficiency and accuracy of specimen processing on the slides. It should be emphasized that the cover plates 300b slide against respective upper surfaces of the slides 500b all the time.

### Embodiment 4:

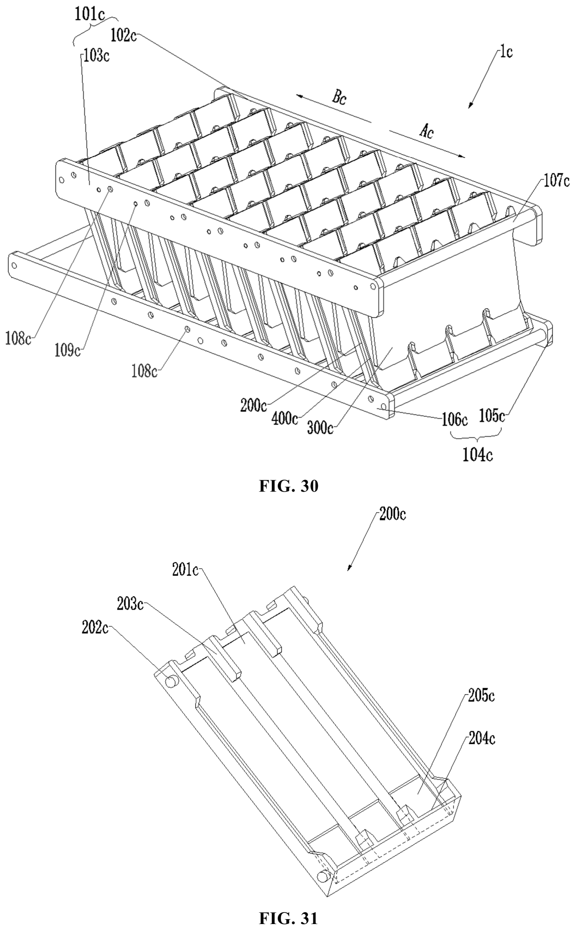

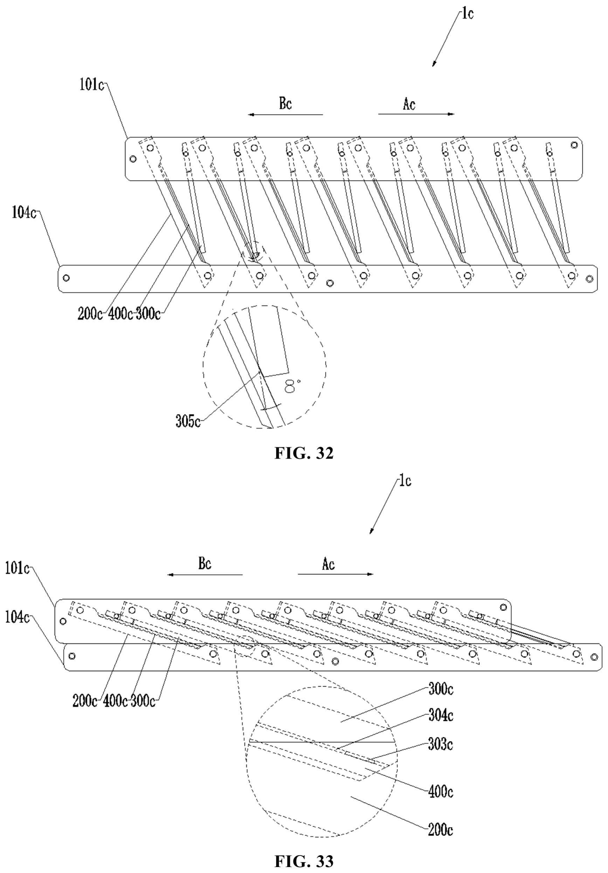

With reference to FIG. 30 to FIG. 33, the present embodiment provides an incubation holder 1c, which can include a holder assembly 100c, bottom plates 200c, and cover plates 300c, where the bottom plates 200c are configured to load slides 400c, and each slide 400c is located between respective bottom plate 200c and cover plate 300c.

In the embodiment, the holder assembly 100c includes an upper holder 101c and a lower holder 104c, both of which can adopt a plate-shaped structure. Two sides of an upper part of each bottom plate 200c are connected to the upper holder 101c, and two sides of a lower part of each bottom plate 200c are connected to the lower holder 104c. Each cover plate 300c is correspondingly provided at one side of the bottom plate 200c. Two sides of an upper part of the cover plate 300c are connected to the upper holder 101c, and a lower part of the cover plate 300c can be attached to an upper surface of corresponding slide 400c. The upper holder 101c, when driven by an external force, is capable of moving relative to the lower holder 104c, allowing the upper holder 101c and the lower holder 104c to be gradually separated from each other or approach toward each other, so as to increase or decrease a size of an opening between the cover plate 300c and the slide 400c.

In the embodiment, the upper holder 101c moves along an arc-shaped track to be gradually separated from and approach toward the lower holder 104c, so that the cover plates 300c connected to the upper holder 101c have at a relatively large range of motion, thus facilitating reagent flow between respective cover plates 300c and slides 400c and eliminating bubbles in the reagent.

The upper holder 101c includes a first upper holder 102c and a second upper holder 103c. The first upper holder 102c and the second upper holder 103c are arranged bilaterally symmetrically. The first upper holder 102c and the second upper holder 103c are parallel to each other. Both the first upper holder 102c and the second upper holder 103c are provided with a plurality of first connecting portions 108c and second connecting portions 109c.

The lower holder 104c can include a first lower holder 105c and a second lower holder 106c, where the first lower holder 105c and the second lower holder 106c are arranged bilaterally symmetrically. The first lower holder 105c and the second lower holder 106c are arranged in parallel to each other. Both the first lower holder 105c and the second lower holder 106c are provided with a plurality of first connecting portions 108c. A distance between each two adjacent first connecting portions 108c is equal, and a distance between each two adjacent second connecting portions 109c is equal.

Each bottom plate 200c is provided with third connecting portions 202c on two sides at both top and bottom. The third connecting portions 202c can be protruding shafts, the first connecting portions 108c can be circular holes, and the third connecting portions 202c can rotate within the first connecting portions 108c. Through connection between the third connecting portions 202c and the first connecting portions 108c, the bottom plates 200c are rotatably connected between the first upper holder 102c and the second upper holder 103c, and rotatably connected between the first lower holder 105c and the second lower holder 106c.

Each cover plate 300c is provided with protruding portions 301c on two sides, where the protruding portions 301c are located on an upper part of the cover plate 300c. The protruding portions 301c are rotatably connected to the second connecting portions 109c, and the cover plate 300c is connected between the first upper holder 102c and the second upper holder 103c through the protruding portions 301c. As the upper part of the cover plate 300c is supported, while the lower part of the cover plate 300c is not connected to the lower holder 104c, the lower part of the cover plate 300c is hung downward under an gravitational effect, and can be attached to the upper surface of the slide 400c or suspended.

Each cover plate 300c is further provided with a support platform 303c, an inclined surface 305c, a capillary gap 304c, and a second isolation portion. For the support platform 303c, the inclined surface 305c, the capillary gap 304c, and the second isolation portion, reference is made to the description in Embodiment 1 (the support platform 303, the inclined surface 305, the capillary gap 304, and the second isolation portion 302), which is not repeated herein.

The holder assembly 100c further can include a plurality of connecting members 107c. The connecting members 107c can be connecting rods. In the upper holder 101c, the connecting members 107c can be provided at two ends of the first upper holder 102c and the second upper holder 103c. In the lower holder 104c, the connecting members 107c can be provided at two ends and middle positions of the first lower holder 105c and the second lower holder 106c.

With reference to FIG. 31, each bottom plate 200c is integrally formed, and the bottom plate 200c is provided with receiving grooves 201c, first isolation portions 203c, a limiting platform 204c, and drainage grooves 205c. For the receiving grooves 201c, the first isolation portions 203c, the limiting platform 204c, and the drainage grooves 205c, reference is made to the description in Embodiment 2 (the receiving grooves 201a, the first isolation portions 203a, the limiting platform 204a, and the drainage grooves 205a in the integrally formed bottom plate 200a), which is not repeated herein.

When the upper holder 101c is driven by an external force to move relative to the lower holder 104c in a first direction Ac as shown in FIG. 30, the upper holder 101c is gradually separated from the lower holder 104c, allowing the openings between respective cover plates 300c and slides 400c to be gradually increased. When reagents need to be washed and/or replaced, the upper holder 101c moves further until when an included angle between respective cover plates 300c and lower holders 104c is close to, greater than or equal to 90°, the cover plates 300c are completely separated from the slides 400c, junctions between bottoms of the cover plates 300c and lower parts of the slides 400c disappear, and the reagents or washing liquids can flow away from between the cover plates300c and the slides 400c.

When the upper holder 101c is driven by an external force to move relative to the lower holder 104c in a second direction Bc as shown in FIG. 30, the upper holder 101c gradually approach toward the lower holder 104c, allowing the openings between respective cover plates 300c and the slides 400c to be gradually decreased until the cover plates 300c and the slides 400c achieve an attachment state.

By connecting the upper holder 101c to an external drive device, the upper holder 101c, when driven by the external drive device, can move relative to the lower holder 104c in the first direction Ac or the second direction Bc. In the process of gradual separation between the upper holder 101c and the lower holder 104c, the upper parts of the cover plates 300c will be driven to be separated from the upper parts of the slides 400c, the capillary gaps 304c are opened, and the reagents in the capillary gaps 304c flow to the included angles between the bottoms of the cover plates 300c and the slides 400c under the gravitational effect.

In the process that the upper holder 101c and the lower holder 104c gradually approach toward each other, the upper parts of the cover plates 300c and the upper parts of the slides 400c will be re-attached to form the capillary gaps 304c again, and the reagents accumulated at the included angles between the bottoms of the cover plates 300c and the lower parts of the slides 400c re-diffuse into the formed capillary gaps 304c due to a capillary siphon action. This cycle repeats, keeping the reagents in a flowing state between the cover plates 300c and the slides 400c, thereby achieving a dynamic incubation effect featured by uniform mixing, bubble elimination, and full coverage of specimens by the reagents, thus accelerating binding between detection substances in the reagents and detected substances in the specimens, and reducing non-specific binding, thereby effectively improving quality and efficiency of specimen processing on the slides 400c.

### Embodiment 5:

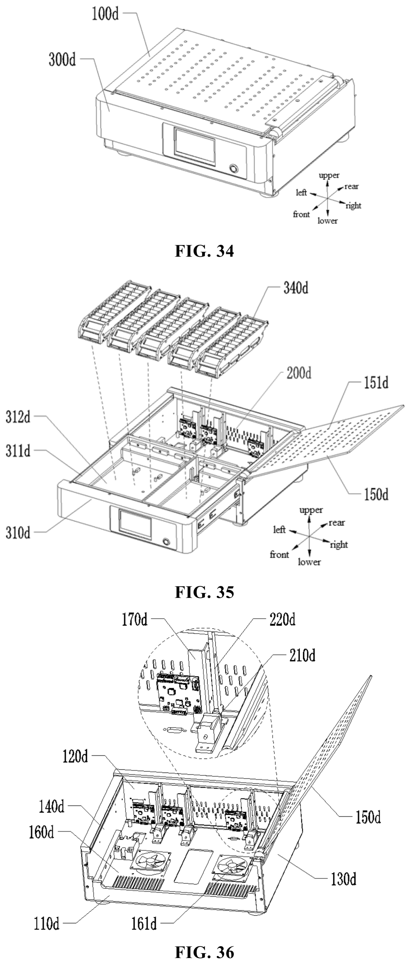

With reference to FIGS. 34-36, the present invention provides an incubator 1d. The incubator 1d includes a housing mechanism 100d, a drive mechanism 200d, and an incubation mechanism 300d. A mounting cavity is provided within the housing mechanism 100d. The drive mechanism 200d and the incubation mechanism 300d are provided in the mounting cavity. The drive mechanism 200d is capable of driving cover plates 343d in the incubation mechanism 300d to move relative to slides 345d, so as to uniformly mix reagents between the cover plates 343d and the slides 345d, achieve dynamic incubation, and improve efficiency and quality of specimen processing on the slides 345d.

The incubation mechanism 300d includes a support assembly 310d and an incubation holder 340d. The support assembly 310d is connected to inner walls of the mounting cavity, and the support assembly 310d is movably connected to the inner walls of the mounting cavity in a pushable-pullable manner. The support assembly 310d includes an incubation pot 311d provided with an incubation tank 312d, the incubation holder 340d is detachably provided in the incubation tank 312d, and the support assembly 310d is capable of driving the incubation holder 340d to move forward and backward. The incubation holder 340d includes cover plates 343d and slides 345d. For the incubation holder 340d, reference is made to the description in Embodiments 1 to 4, which is not repeated herein.

By movably connecting the support assembly 310d to the inner walls of the mounting cavity in the pushable-pullable manner, the support assembly 310d can be pulled open or closed relative to the housing mechanism 100d, that is, the support assembly 310d can be mounted in the housing mechanism 100d like a drawer. Moreover, the incubation holder 340d and the incubation tank 312d are detachably connected, which facilitates disassembly and assembly of the incubation holder 340d and the incubation pot 311d.

In the present embodiment, the drive mechanism 200d includes a drive member 210d and a follower 220d, with the drive member 210d being drivingly connected to the follower 220d. The follower 220d is in transmission connection with the cover plates 343d, and drives the cover plates 343d to move relative to the slides 345d.

With reference to FIG. 34 to FIG. 36, the housing mechanism 100d can include a front plate 110d, a rear plate 120d, a first side plate 130d, a second side plate 140d, an upper cover 150d, and a base plate 160d. The mounting cavity is formed by connecting the front plate 110d, the rear plate 120d, the first side plate 130d, the second side plate 140d, the upper cover 150d, and the base plate 160d. A fan 161d can be provided within the mounting cavity. The upper cover 150d is pivotally connected to the first side plate 130d. The upper cover 150d can be opened. The front plate 110d is provided with an opening for the incubation mechanism 300d to enter and exit.

It should be noted that, a connection mode between the upper cover 150d and the first side plate 130d is not limited to a flippable connection, and may also be a fixed connection. For example, one edge of the upper cover 150d is fixedly connected to the first side plate 130d, and the upper cover 150d can be opened or retracted similarly to a venetian blind in structure, so that opening and closing of the upper cover 150d can also be realized.

When cooling is required inside the housing mechanism 100d, it can be implemented by the fan 161d. In addition, heat dissipation holes further can be provided in the base plate 160d and the rear plate 120d for cooling, so as to protect electronic components within a housing structure.

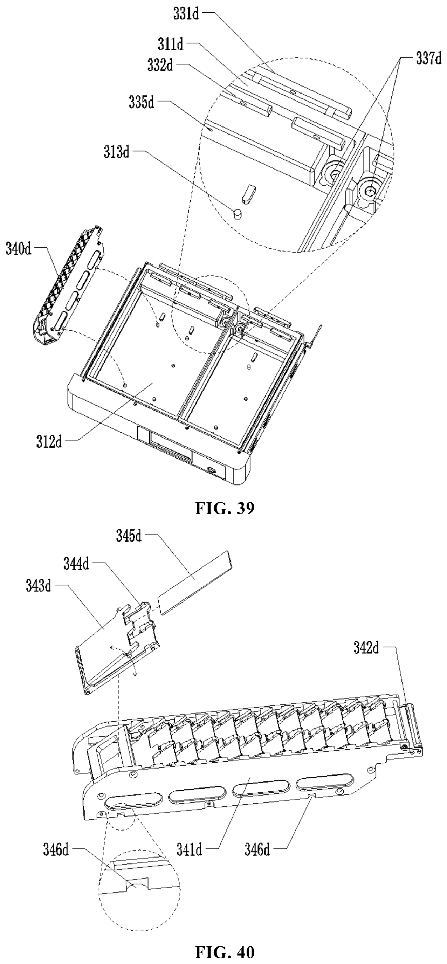

With reference to FIG. 40, in an example, a plurality of dispensing holes 151d are provided in the upper cover 150d. The dispensing holes 151d are through holes. The upper cover 150d is located above the incubation pot 311d. Herein, the incubation pot 311d can be loaded in the incubation holder 340d, the incubation holder 340d includes the cover plates 343d and the slides 345d, the plurality of dispensing holes 151d are corresponding to a plurality of slides 345d below on a one-to-one basis, the dispensing holes 151d are aligned directly above upper parts of the slides 345d, and reagents are added dropwise to between the slides 345d and the cover plates 343d through the dispensing holes 151d. It should be noted that the upper cover 150d may not be provided with the dispensing holes 151d, and when adding reagents, the upper cover 150d can be opened to add the reagents between the slides 345d and the cover plates 343d.

With reference to FIG. 35 to FIG. 38, the support assembly 310d can include a support frame 315d, a pair of slide rails, and the incubation pot 311d. The pair of slide rails is connected to two sides of the support frame 315d, respectively. The incubation pot 311d is connected to the support frame 315d. The incubation tank 312d is provided in the incubation pot 311d. The incubation tank 312d can load the incubation holder 340d.

The support frame 315d can include a first support plate 316d, a second support plate 317d, a third support plate 318d, and a cross beam 319d. The third support plate 318d is provided in front of the cross beam 319d. Two ends of the third support plate 318d are connected to front ends of the first support plate 316d and the second support plate 317d, respectively. Two ends of the cross beam 319d are connected to rear ends of the first support plate 316d and the second support plate 317d, respectively. The cross beam 319d is configured to support a bottom of the incubation pot 311d.

Herein, a connection mode between the incubation pot 311d and the support frame 315d can be a fixed connection or a supported connection. For example, four edges of the incubation pot 311d can be fixedly connected to the first support plate 316d, the second support plate 317d, the third support plate 318d, and the cross beam 319d respectively through nuts and bolts. For another example, stepped grooves are provided in upper edges of the first support plate 316d, the second support plate 317d, and the third support plate 318d, so that upper edges of a pot body of the incubation pot 311d can be supported in the stepped grooves, while the bottom of the incubation pot 311d is supported on the cross beam 319d. In this way, it is more convenient to replace the incubation pot 311d.

The pair of slide rails can include a first slide rail 321d and a second slide rail 322d. The first support plate 316d and the first side plate 130d are connected to two sides of the first slide rail 321d. The second support plate 317d and the second side plate 140d are connected to two sides of the second slide rail 322d. By pulling the third support plate 318d to move forward and backward, the support frame 315d can be guided by the first slide rail 321d and the second slide rail 322d to move forward and backward.

By slidably connecting the support frame 315d to side walls of the mounting cavity through the pair of sliding rails, and connecting the incubation pot 311d to the support frame 315d, the support frame 315d is capable of driving the incubation pot 311d to slide out of the mounting cavity, and further driving the incubation holder 340d to move forward and backward, thus facilitating removal of the incubation holder 340d from the incubation tank 312d, loading of tissue specimens, and washing of the incubation holder 340d.

In another embodiment, the support assembly 310d can also be connected to the inner walls of the mounting cavity in other ways. For example, the support assembly 310d can be fixedly connected to the inner walls of the mounting cavity. Specifically, the support assembly 310d can include a support frame 315d and an incubation pot 311d, the support frame 315d is fixedly connected to the inner walls of the mounting cavity on two sides, the incubation pot 311d is connected to the support frame 315d, the upper cover 150d of the housing mechanism 100d is in a flippable connection with the first side plate 130d, the upper cover 150d is capable of opening and closing relative to the second side plate 140d, and when the upper cover 150d is in an open state, it is convenient to take out the incubation holder 340d out of the incubation pot 311d.

The support assembly 310d can further include a front panel 320d. A display screen can be provided on the front panel 320d. The display screen can be a touch screen, which can display operation state information about the incubator 1d, and also can allow a control operation on the display screen.

The support assembly 310d can further include a heating element 323d and a thermal insulator 324d. The heating element 323d is connected to the bottom of the incubation pot 311d and fixedly connected to the support frame 315d. The heating element 323d is configured to heat the pot body of the incubation pot 311d so as to be capable of performing a heating treatment on water in the incubation tank 312d. The thermal insulator 324d is provided below the heating element 323d and connected to the bottom of the support frame 315d. The thermal insulator mainly serves a function of thermal insulation and protection, thus avoiding damage to other electronic components in the mounting cavity due to excessively high temperature during heating of the heating element 323d. It should be noted that the heating element 323d can be a heating component such as a heating sheet or a heating film, and the thermal insulator 324d can be a thermal insulation plate. The heating can also be external heating that is transported into the incubation pot through a pipeline.

With reference to FIG. 35 to FIG. 38, in the embodiment, the support assembly 310d includes a plurality of incubation pots 311d, where the incubation pots 311d are arranged side by side. Each incubation pot 311d is provided with the incubation tank 312d, and each incubation tank 312d can load at least one incubation holder 340d therein.

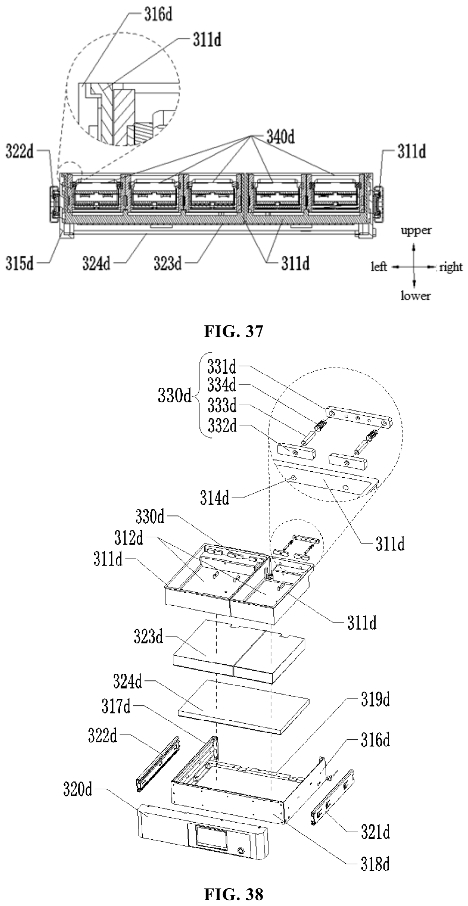

With reference to FIG. 38 to FIG. 40, limiting posts 313d are provided on the bottom of each incubation tank 312d, limiting slots 346d are provided on the bottom of the incubation holder 340d, and the limiting posts 313d can cooperate with the limiting slots 346d to prevent the incubation holder 340d from shaking.

The incubation holder 340d includes a holder assembly 341d, a push-pull assembly 342d, cover plates 343d, bottom plates 344d, and slides 345d. Through forward and backward pushing of the push-pull assembly 342d, the cover plates 343d can move relative to the slides 345d, and in this way, reagents between the cover plates 343d and the slides 345d can be agitated, thus accelerating reaction between the reagents and tissue specimens on the slides 345d. For details, reference can be made to the description of any structure in Embodiment 1 to Embodiment 4.

The holder assembly 341d can include a pair of side plates. The limiting slots 346d are provided in bottoms of the two side plates. Each side plate can be provided with two limiting slots 346d. The limiting slots 346d are semi-cylindrical. Correspondingly, a plurality of limiting posts 313d are provided in the bottom of the incubation tank 312d. The limiting posts 313d can be corresponding to the limiting slots 346d on a one-to-one basis. The limiting slots 346d are adapted to the limiting posts 313d. The limiting posts 313d can be inserted into respective limiting slots 346d, and front-back and left-right shaking of the incubation holder 340d is limited by two or more limiting posts 313d. Herein, in a direction from left to right, a distance between each two adjacent limiting posts 313d or a distance between respective limiting posts 313d and a side edge of the incubation tank 312d is slightly greater than a width of the incubation holder 340d. In a direction from front to rear, a distance between each two adjacent limiting posts 313d is equal to a distance between each two adjacent limiting slots 346d in the same side of the incubation holder 340d.

The push-pull assembly 342d can include a pair of pushers and a connecting portion. For the pushers and the connecting portion, reference is made to the description in Embodiments 1 to 3 (for example, the pushers 400 and the fifth connecting portion 403), which is not repeated herein. Alternatively, the push-pull assembly 342d includes an upper holder and a connecting portion. For the upper holder and the connecting portion, reference is made to the description in Embodiment 4 (the upper holder 101c and the connecting member 107c), which is not repeated herein.

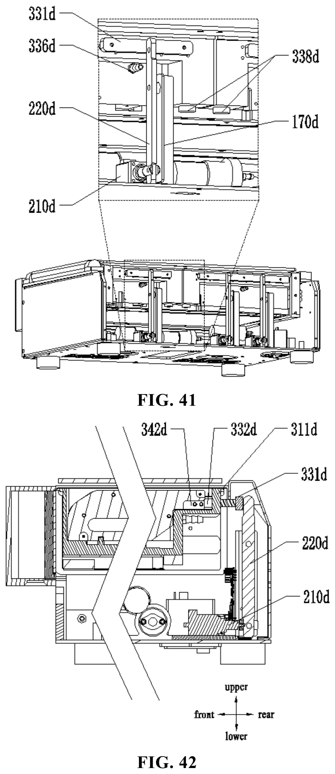

With reference to FIG. 39 and FIG. 41, a water inlet hole 335d is provided in a rear side wall of the incubation tank 312d, and a water inlet joint 336d is provided on a rear side of the incubation pot 311d, where the water inlet hole 335d communicates with the water inlet joint 336d, and the water inlet joint 336d is connected to a water inlet pump. A water outlet hole 337d is provided in the bottom of the incubation tank 312d, a water outlet joint 338d is provided in the bottom of the incubation pot 311d, the water outlet hole 337d communicates with the water outlet joint 338d, and the water outlet joint 338d is connected to a water outlet pump.

With reference to FIG. 38 to FIG. 40, the drive mechanism 200d is in transmission connection with the incubation holder 340d, and the follower 220d is driven by the drive member 210d to move, so as to drive the cover plates 343d to move relative to the slides 345d.

The support assembly 310d further includes a connecting assembly 330d. The connecting assembly 330d includes a first push plate 331d, second push plates 332d, connecting rods 333d, and elastic members 334d. Herein, the second push plates 332d can be magnet-made plate-shaped parts, the connecting portion at a tail end of the push-pull assembly 342d can also be made from a material which can be attracted by magnet, such as iron, nickel, and cobalt, and the elastic members 334d can be springs, or the like.

The first push plate 331d and the second push plate 332d are connected to two ends of the connecting rod 333d, respectively. Connecting rod holes 314d are provided in a rear side of the incubation pot 311d at positions corresponding to the second push plates 332d. The connecting rod holes 314d are circular through holes, and the connecting rods 333d can pass through respective connecting rod holes 314d and move forward and backward in the connecting rod holes 314d. The first push plate 331d and the second push plate 332d are connected to two ends of the connecting rod 333d, respectively. The second push plates 332d are located within the incubation tank 312d. The elastic members 334d are sleeved over the connecting rods 333d and located between the incubation pot 311d and the first push plate 331d.

As the elastic members 334d are sleeved over the connecting rods 333d and located between the incubation pot 311d and the first push plate 331d, and the first push plate 331d and the second push plates 332d are connected to two ends of the connecting rods 333d, respectively, synchronous movement of the first push plate 331d and the second push plates 332d can be realized, with a function of restoring an original state. When the follower 220d moves forward and presses forward against the first push plate 331d, the second push plates 332d can be driven to move forward and the elastic members 334d are compressed. When the follower 220d moves backward, the elastic members 334d tend to recover the original state, in which case the elastic members 334d apply a backward thrust to the first push plates 331d, so that the elastic members 334d push the first push plate 331d to move backward, and drive the second push plates 332d to move backward to the original state.

Herein, the follower 220d abuts against the first push plate 331d, and the second push plates 332d are in transmission connection with the cover plates 343d. The second push plates 332d are capable of magnetically attract the connecting portion at the tail end of the push-pull assembly 342d. The first push plate 331d is driven by the follower 220d to move forward and backward, so as to drive the forward and backward movement of the second push plates 332d, the second push plates 332d drive the connecting portion to move forward and backward, the connecting portion drives the pushers to move forward and backward, and the pushers drive the cover plates 343d to move relative to the slides 345d. The first push plate 331d is detachably connected to the follower 220d. In a process of pulling the support assembly 310d out of the mounting cavity, the drive assembly will not follow the connecting assembly 330d to move forward, thus preventing an electrical wire on the drive assembly from being pulled out and damaged.

With reference to FIG. 35, and FIG. 39 to FIG. 42, the drive member 210d can be a lead screw motor, and the follower 220d can be a transmission rod or a transmission plate. An output end of the drive member 210d is pivotally connected to a lower end of the follower 220d, and the output end of the drive member 210d is capable of moving forward and backward. The housing mechanism 100d can further include a mounting plate 170d. A middle part of the follower 220d is pivotally connected to the mounting plate 170d, so that upper and lower ends of the follower 220d can swing about a position pivotally connected to the mounting plate 170d. When the output end of the drive member 210d moves forward, the upper end of the follower 220d swings backward, and when the output end of the drive member 210d moves backward, the upper end of the follower 220d swings forward. In this way, through forward and backward swinging of the upper end of the follower 220d, the first push plate 331d is allowed to move forward and backward, thereby driving the cover plates 343d to move relative to the slides 345d.

Herein, the drive member 210d is fixedly connected to the base plate 160d and located below the incubation mechanism 300d, and the drive member 210d is located within a range of top-view projection of the incubation mechanism 300d. In this way, the connecting assembly 330d, the follower 220d, and the drive member 210d are arranged in a U-shape, which can reduce a front-back distance of the housing mechanism 100d and an occupied area thereof, and avoid a linear arrangement of the connecting assembly 330d, the follower 220d, and the drive member 210d, which results in a relatively large front-back distance of the housing mechanism 100d and takes up room. It should be noted that, the drive member 210d is located within the range of top-view projection of the incubation mechanism 300d, but the present invention is not limited thereto, and the drive member 210d can also be provided at a rear side of the incubation mechanism 300d.

With reference to FIG. 39, FIG. 40, and FIG. 43, the drive member 210d can be a stepper motor, and the follower 220d can be an eccentric wheel. The housing mechanism 100d can further include the mounting plate 170d. The drive member 210d is fixedly connected vertically to the mounting plate 170d. The output end of the drive member 210d faces upwards and is connected to a bottom end of the eccentric wheel, and when the output end of the drive member 210d rotates, the eccentric wheel also rotates therewith. A periphery of the eccentric abuts against the first push plate 331d, and rotation of the eccentric wheel will drive the first push plate 331d to move forward and backward, so as to enable the cover plates 343d to move relative to the slides 345d. Herein, the drive member 210d and the follower 220d are located below the connecting assembly 330d and not completely within the range of top-view projection of the connecting assembly 330d. Use of the stepper motor as the drive member 210d can save more costs than a lead screw motor.

Although the drive member 210d and the follower 220d are located below the connecting assembly 330d in the above embodiment, the present invention is not limited thereto. The drive member 210d and the follower 220d can also be located behind the connecting assembly 330d. For example, the drive member 210d can be a stepper motor, the follower 220d can be a follower lever, the stepper motor is fixedly connected to a top of the mounting plate 170d, an output end of the stepper motor is connected to the follower lever, and the follower lever abuts against the first push plate 331d. In this case, the follower lever and an output shaft of the stepper motor are in a straight line and perpendicular to the first push plate 331d, and the first push plate 331d can move forward and backward through forward and backward movement of the output shaft of the stepper motor.

### Embodiment 6:

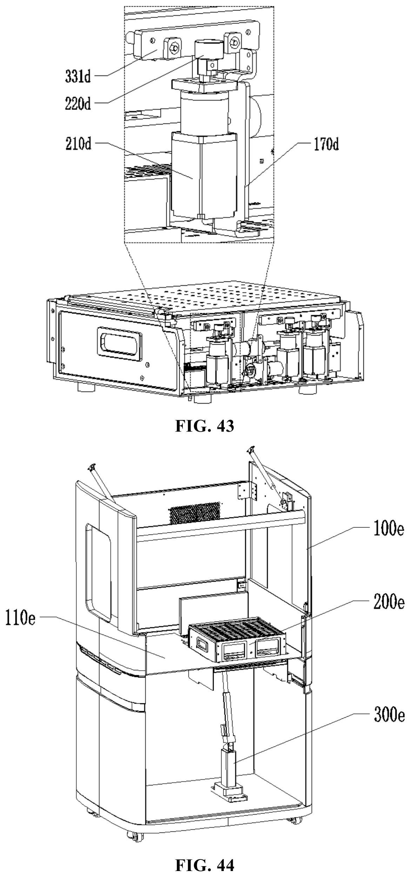

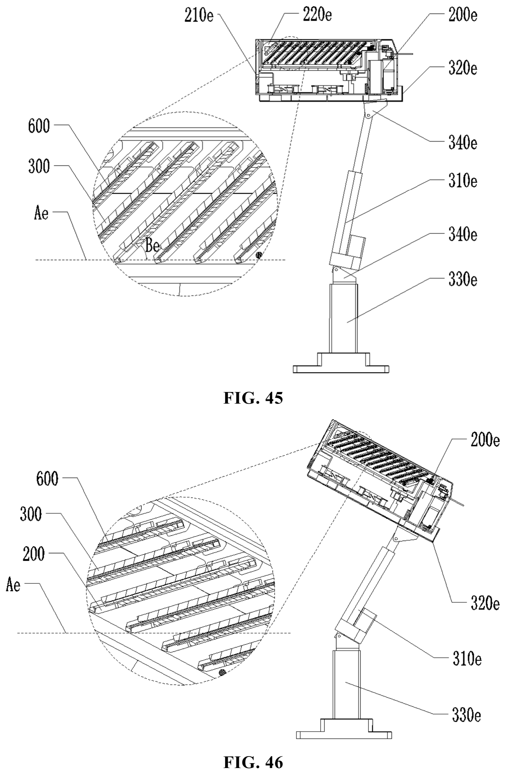

With reference to FIGS. 44-49, the present embodiment provides a staining device, including a machine bench 100e, and an incubator 200e and a tilt mechanism 300e provided on the machine bench 100e. The tilt mechanism 300e drives the incubator 200e to swing downward, so that a tilt angle Be of cover plates 300 and slides 600 relative to a horizontal plane Ae decreases, thus reducing reagent loss of between the cover plates 300 and the slides 600.

The incubator 200e can include a housing mechanism 210e, an incubation pot 220e, and at least one set of incubation holders. The incubation pot 220e is provided on the housing mechanism 210e. The incubation holders are detachably provided on the incubation pot 220e. The housing mechanism 210e and the incubation pot 220e can adopt structures in Embodiment 5, and the incubation holders can adopt structures of the incubation holders 1, 1a, 1b, and 1c in Embodiments 1 to 4, which are not repeated herein. The following description is given by taking the structure of the incubation holder in Embodiment 1 as an example.

In an initial state, the incubator 200e, the incubation pot 220e, and the holder assembly 100 remain parallel to the horizontal plane Ae. Bottom plates, the cover plates, and the slides are provided obliquely with respect to the holder assembly, that is, the bottom plates, the cover plates, and the slides form certain included angles with the horizontal plane. The tilt angle Be of the bottom plates can range from 15° to 90°, and correspondingly, the tilt angle Be of the slides 600 ranges from 15° to 90°. For example, in the initial state, the incubation holder with the tilt angle Be of the bottom plates being 35° is selected, and the tilt angle Be of the slides 600 is also 35°.

When the incubator 200e swings downward to an incubation state, the incubator 200e forms a certain included angle with the horizontal plane Ae, while the included angles of the bottom plates, the slides, and the cover plates relative to the horizontal plane Ae decrease. The tilt angle Be of the slides 600 in the incubation state relative to the horizontal plane Ae is smaller than the tilt angle Be of the slides 600 in the initial state relative to the horizontal plane Ae. For example, the incubation holder with the tilt angle Be of the bottom plates 200 being 35° can be selected, and in the initial state, the tilt angle Be of the slides 600 relative to the horizontal plane Ae is 35°. The incubator 200e swings to the incubation state, and the tilt angle Be of the slides 600 relative to the horizontal plane Ae is 0° (i.e., the slides 600 are parallel to the horizontal plane Ae). It should be noted that in the incubation state, the tilt angle Be of the slides 600 relative to the horizontal plane Ae can also be 2°, 3°, 4°, or the like.

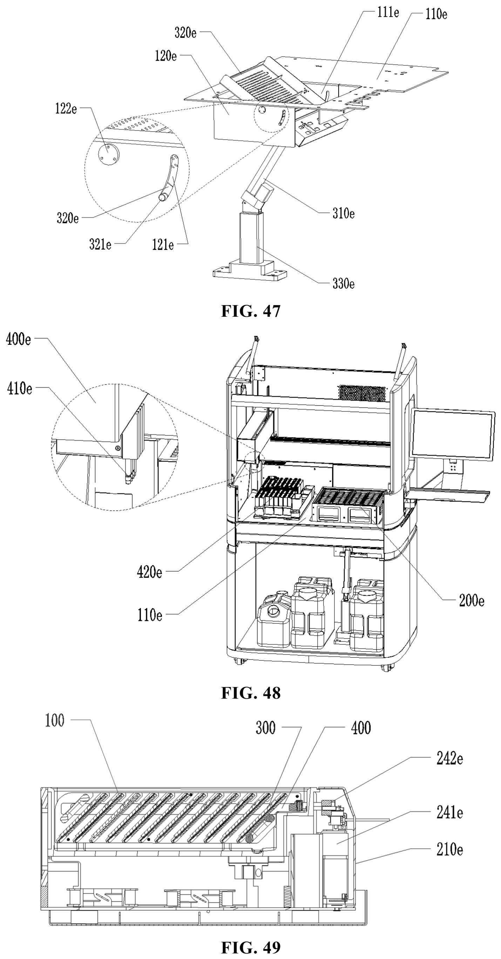

With reference to FIG. 49, the incubator 200e includes a drive assembly, and the cover plate 300 can be driven by the drive assembly to move relative to the slides 600. The drive assembly can include a drive motor 241e and a connecting plate 242e, where the drive motor 241e can be provided in the incubator 200e, and the connecting plate 242e has one end connected to an output end of the drive motor 241e, and the other end connected to pushers 400. The drive motor 241e drives the connecting plate 242e to move forward and backward, so as to drive the pushers 400 to slide forward and backward in sliding slots 105. For the drive motor 214e and the connecting plate 242e, reference is made to description in Embodiment 5, which is not repeated herein.

With reference to FIG. 44 to FIG. 47, the tilt mechanism 300e includes a bearing plate 320e and a drive member 310e. Two sides of the bearing plate 320e are pivotally connected to the machine bench 100e. The drive member 310e is provided on the machine bench 100e and connected to a bottom of the bearing plate 320e, so as to drive the bearing plate 320e to swing. The incubator 200e is provided on the bearing plate 320e.

An operation platform 110e is provided on the machine bench 100e, and a through slot 111e is provided in the operation platform 110e. The through slot 111e can be square, rectangular, or other shapes adapted to the bearing plate 320e. A pair of support plates 120e extending downward are provided on two side edges of the through slots 111e, and the bearing plate 320e is pivotally connected between the pair of support plates 120e. The support plates 120e and the bearing plate 320e are provided with shaft holes at pivot points, and connected through coupling members 122e (which can be coupling bolts, shafts, etc.), and the bearing plate 320e swings around the coupling members 122e. In the initial state, the bearing plate 320e is parallel to the horizontal plane Ae, and in the incubation state, the bearing plate 320e forms a certain included angle with the horizontal plane Ae.

Each support plate 120e is provided with an arc-shaped groove 121e at a position away from the pivot point, with a center of the arc-shaped groove coinciding with the pivot point. The bearing plate 320e is provided with a guiding rod 321e protruding outward on two sides, and the guiding rod 321e is capable of sliding within the arc-shaped slot 121e. Herein, a length of an arc-shaped track of the arc-shaped slot 121e is about 23 centimeters, so that a maximum distance of the arc-shaped track of the bearing plate 320e swinging downward can be 23 centimeters.

The tilt mechanism 300e includes a base 330e. The base 330e is provided in the machine bench 100e. Two ends of the drive member 310e are pivotally connected to the base 330e and the bearing plate 320e, respectively. In an example, the drive member 310e is an electric push rod, a top end of the drive member 310e is pivotally connected to a pointed end of a triangular connecting frame 340e, and a flat end of the triangular connecting frame 340e is connected to a bottom surface of the bearing plate 320e. A bottom end of the drive member 310e is pivotally connected to the pointed end of the triangular connecting frame 340e, and the flat end of the triangular connecting frame 340e is connected to a top surface of the base 330e. Through pivotal connection with the top end and the bottom end of the drive member 310e, it is possible to better cooperate with the swing of the bearing plate 320e.

In the present embodiment, the drive member 310e is connected to the bottom of the bearing plate 320e, but the present invention is not limited thereto. For example, the drive member 310e can be a deceleration stepper motor or a servo motor, where the deceleration stepper motor or the servo motor is provided at the pivot point of the support plate 120e and the bearing plate 320e, and drivingly connected to the coupling member 122e at the pivot point (not shown), and the deceleration stepper motor or the servo motor drives the coupling member 122e to rotate, so as to adjust inclination of the bearing plate 320e relative to the horizontal plane Ae.

With reference to FIG. 48, the operation platform 110e is provided with a mechanical arm 400e and reagent bottles 420e, where the mechanical arm 400e can move forward and backward, left and right, and vertically. The mechanical arm 400e is connected to sampling needles 410e, and the mechanical arm 400e drives the sampling needles 410e to move freely above the operation platform 110e. The mechanical arm 400e is capable of moving the sampling needles 410e into respective reagent bottles 420e to aspirate reagents in the reagent bottles 420e, and moving to above the cover plates 300 and the slides 600, so as to dropwise add the reagents into gaps 304 between the cover plates 300 and the slides 600.

With reference to FIG. 44 and FIG. 49, a water injection device (not shown) and a liquid discharge device (not shown) are provided in a mounting cavity of the incubator 200e, and the incubation pot 220e is provided with a water injection port and a liquid discharge port, where the water injection device is connected to the water injection port, and the liquid discharge device is connected to the liquid discharge port. A water tank for holding clean water and a waste liquid tank for collecting waste liquids can be further provided below the operation platform 110e. The water injection device can extract the clean water in the water tank into the incubation pot 220e, and the liquid discharge device can extract the waste liquids in the incubation pot 220e into the waste liquid tank.

With reference to FIG. 48, a host computer is provided at one side of the machine bench 100e, where the host computer is electrically connected to the incubator 200e, the mechanical arm 400e, and the tilt mechanism 300e, respectively, and the host computer can be a computer configured to control operation states of the incubator 200e, the mechanical arm 400e, and the tilt mechanism 300e.

The present embodiment provides a staining method, applicable to the above staining device. The method can include steps as follows.

In step S102, a liquid is added into the gaps 304 between the cover plates 300 and the slides 600. Specifically, in this case, the incubator 200e is in the initial state, and the incubator 200e and the bearing plate 320e are parallel to the horizontal plane Ae, and when remaining parallel to the horizontal plane Ae,

In step S104, the tilt mechanism 300e drives the incubator 200e to swing downward to the incubation state, and the tilt mechanism 300e ceases driving. Specifically, during the downward swing of the incubator 200e, the tilt angle Be of the incubator 200e relative to the horizontal plane Ae increases, while the tilt angle Be of the cover plates 300 and the slides 600 relative to the horizontal plane Ae decreases. For example, the incubation holder with the tilt angle Be of the bottom plates 200 being 35°C is selected, and the tilt angle Be of the slides 600 relative to the horizontal plane Ae in the incubation state is set to be 0°. The drive member 310e drives the incubator 200e to swing downward to the incubation state, and the tilt angle Be of the slides 600 relative to the horizontal plane Ae changes from 35° to 0°.

In step S106, the cover plates 300 move relative to the slides 600, so as to uniformly mix the liquid between the cover plates and the slides. Specifically, when the incubator 200e is in the incubation state, the drive motor 241e drives the pushers 400 to move forward and backward in the sliding slots 105, so as to drive the cover plates to move relative to the slides, and thus reagents between the cover plates and the slides react thoroughly with specimens, or residues between the cover plates and the slides are thoroughly agitated and washed with clean water.

It can be understood that the way of the cover plates moving relative to the slides differs according to different structures of the incubation holders in Embodiment 1 to Embodiment 4, for example, opening and closing movement and attachment movement of the cover plates relative to the slides. The opening and closing movement is that bottoms of the cover plates abut against the slides, while tops of the cover plates move to be close to and away from the slides. The attachment movement is that the cover plates are attached to the slides, and the cover plates reciprocate along a length direction of the slides.

In step S108, the tilt mechanism 300e drives the incubator 200e to swing upward until the incubator 200e is parallel to the horizontal plane Ae, and the tilt mechanism 300e ceases driving. Specifically, the drive member 310e drives the bearing plate 320e to swing upward, so as to change the incubator 200e from the incubation state to the initial state. With reference to the example in step S104, in a process of the incubator 200e changing from the incubation state to the initial state, the tilt angle Be of the slides relative to the horizontal plane Ae changes from 0° to 35°.

It should be noted that this staining method is applicable to detection of specimens on the slides, including all or individual steps of treatment processes of deparaffinization, washing, retrieval, primary antibody reagent application, blocking agent application, secondary antibody reagent application, color developing agent application, hematoxylin application, and bluing.

In the present embodiment, the incubator 200e is driven by the tilt mechanism 300e to swing downward, so as to decrease the tile angle Be of the cover plates and the slides relative to the horizontal plane Ae. This can avoid a risk of loss of the reagents between the cover plates and the slides from the bottoms of the gaps due to excessive tilt angle Be between the cover plates and the slides during incubation, thereby reducing reagent consumption, eliminating the need to add the reagents multiple times, and improving detection efficiency.

### Embodiment 7:

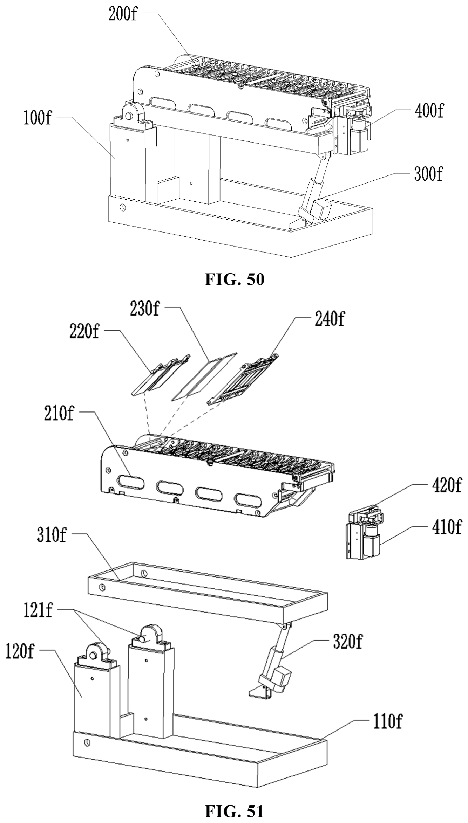

With reference to FIG. 50 to FIG. 53, the present invention provides an incubation apparatus, including a pedestal 100f, an incubation holder 200f, and a tilt mechanism 300f. The tilt mechanism 300f is provided on the pedestal 100f, and drivingly connected to the incubation holder 200f.

With reference to FIG. 50 and FIG. 51, in an example, the tilt mechanism 300f and the incubation mechanism are provided on the pedestal 100f, respectively, and a drive mechanism 400f is connected to the tilt mechanism 300f. Herein, the pedestal 100f can include a base 110f and two symmetrically arranged supporting columns 120f. The supporting columns 120f are provided at a left end of the pedestal 100f, while the drive mechanism 400f is provided at an end away from the supporting columns 120f. A tail portion of the incubation holder 200f faces the drive mechanism 400f.

The tilt mechanism 300f includes a first drive member 320f and a bearing plate 310f, with one end of the bearing plate 310f being pivotally connected to the two supporting columns 120f. For example, the two supporting columns 120f are each provided with a shaft 121f, with two shafts 121f being arranged symmetrically, and the bearing plate 310f is provided with through holes at positions corresponding to the shafts 121f, so that a pivot connection between the bearing plate 310f and the two supporting columns 120f can be realized through the shafts 121f and the through holes. The first drive member 320f can be a telescopic motor, with an output end of the telescopic motor being connected to an end of the bearing plate 310f (the end away from the supporting posts 120f), and a bottom of the telescopic motor being connected to the base 110f.

The drive mechanism 400f is connected to one end of the bearing plate 310f. The drive mechanism 400f can include a third drive member 410f and a connecting block 420f. The third drive member 410f can be an eccentric motor, and the third drive member 410f is connected to the connecting block 420f. The connecting block 420f is indirectly connected to cover plates 220f. When the third drive member 410f drives the connecting block 420f to move forward and backward, the connecting block 420f is capable of driving the cover plates 220f to move relative to slides 230f, so as to accelerate reaction between a specimen and a reagent and improve detection efficiency.

An operation process of the incubation apparatus can be as follows: in an initial state, the bearing plate 310f remains parallel to a horizontal plane, and the bearing plate 310f is supported by the two supporting columns 120f and the first drive member 320f. In this case, a liquid can be added to gaps between the cover plates 220f and the slides 230f. When the initial state needs to be converted to an incubation state, the output end of the first drive member 320f retracts, the bearing plate 310f swings downward around the shafts 121f, and correspondingly, the incubation holder 200f synchronously swings downward. When the incubation holder 200f swings downward to the incubation state, the first drive member 320f ceases driving. In this case, a tilt angle of the slides 230f relative to the horizontal plane decreases, so as to reduce a risk of loss of the reagent between the cover plates 220f and the slides 230f from bottoms of the gaps. When the first drive member 320f ceases driving, the drive mechanism 400f can be activated to operate, so as to enable the cover plates 220f to move relative to the slides 230f, allowing uniform mixing of the specimen and the reagent between the cover plates 220f and the slides 230f. Upon completion of uniform mixing, the drive mechanism 400f stops operation, and the output end of the first drive member 320f extends out, so as to drive the incubation holder 200f to swing upward until the bearing plate 310f is parallel to the horizontal plane, at which point the first drive member 320f ceases driving, and in this case the incubation holder 200f is parallel to the horizontal plane.

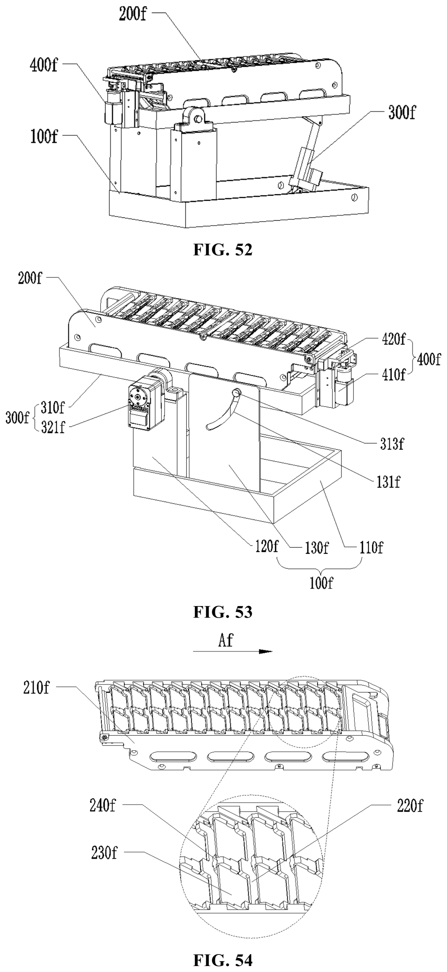

With reference to FIG. 52, in another example, the tilt mechanism 300f and the incubation mechanism are provided on the pedestal 100f, respectively, and the drive mechanism 400f is connected to the tilt mechanism 300f. Herein, the pedestal 100f can include a base 110f and two symmetrically arranged supporting columns 120f. The supporting columns 120f are provided at a left end of the pedestal 100f, and the drive mechanism 400f is also provided at an end close to the supporting columns 120f. A tail portion of the incubation holder 200f faces the drive mechanism 400f.

The tilt mechanism 300f can include a first drive member 320f and a bearing plate 310f, with one end of the bearing plate 310f being pivotally connected to the two supporting columns 120f. For example, the two supporting columns 120f are each provided with a shaft 121f, with two shafts 121f being arranged symmetrically, and the bearing plate 310f is provided with through holes at positions corresponding to the shafts 121f, so that a pivot connection between the bearing plate 310f and the two supporting columns 120f can be realized through the shafts 121f and the through holes. The first drive member 320f can be a telescopic motor, with an output end of the telescopic motor being connected to an end of the bearing plate 310f away from the supporting posts 120f, and a bottom of the telescopic motor being connected to the base 110f.

The drive mechanism 400f is connected to one end of the bearing plate 310f. The drive mechanism 400f can include a third drive member 410f and a connecting block 420f. The third drive member 410f can be an eccentric motor, and the third drive member 410f is connected to the connecting block 420f. The connecting block 420f is indirectly connected to cover plates 220f (see following introduction to the incubation holder 200f for a specific connection method). When the third drive member 410f drives the connecting block 420f to move forward and backward, the connecting block 420f is capable of driving the cover plates 220f to move relative to slides 230f, so as to accelerate a reaction between a specimen and a reagent and improve detection efficiency.

An operation process of the incubation apparatus can be as follows: in an initial state, the bearing plate 310f remains parallel to a horizontal plane, and the bearing plate 310f is supported by the two supporting columns 120f and the first drive member 320f. In this case, a liquid can be added to gaps between the cover plates and the slides. When the initial state needs to be converted to an incubation state, the output end of the first drive member 320f extends out, the bearing plate 310f swings upward around the shafts 121f, and correspondingly, the incubation holder 200f synchronously swings upward. When the incubation holder 200f swings upward to the incubation state, the first drive member 320f ceases driving. In this case, a tilt angle of the slides relative to the horizontal plane decreases, so as to reduce a risk of loss of the reagent between the cover plates and the slides from bottoms of the gaps. When the first drive member 320f ceases driving, the drive mechanism 400f can be activated to operate, so as to enable the cover plates to move relative to the slides, allowing uniform mixing of the specimen and the reagent between the cover plates and the slides. Upon completion of uniform mixing, the drive mechanism 400f stops operation, and the output end of the first drive member 320f retracts, so as to drive the incubation holder 200f to swing downward until the bearing plate 310f is parallel to the horizontal plane, at which point the first drive member 320f ceases driving, and in this case the incubation holder 200f is parallel to the horizontal plane.

With reference to FIG. 53, in another example, the tilt mechanism 300f and the incubation mechanism are provided on the pedestal 100f, respectively, and the drive mechanism 400f is connected to the tilt mechanism 300f. Herein, the pedestal 100f can include a base 110f and two symmetrically arranged supporting columns 120f. The supporting columns 120f are provided at a left end of the pedestal 100f, and the drive mechanism 400f is provided at a side away from the supporting columns 120f. A tail portion of the incubation holder 200f faces the drive mechanism 400f.

The tilt mechanism 300f can include a second drive member 321f and a bearing plate 310f. The bearing plate 310f is provided with a first connecting hole and a second connecting hole in middle positions. The supporting post 120f at an inner side is provided with a shaft, and the shaft can pass through the first connecting hole and rotate within the first connecting hole. The supporting post 120f at an outer side is provided with a through hole, the second drive member 321f is connected to this supporting column 120f, and a driving shaft of the second drive member 321f passes through this through hole and is connected to the second connecting hole. The second drive member 321f can be a deceleration stepper motor or a servo motor. The second drive member 321f is capable of driving the bearing plate 310f to rotate around the shaft, so as to adjust inclination of the bearing plate 310f relative to a horizontal plane. Herein, an axis of the shaft is the same as an axis of the driving shaft of the second drive member 321f.

A support plate 130f is provided on the pedestal 100f. The support plate 130f is located at a side edge of the bearing plate 310f. An arc-shaped slot 131f is provided on the support plate 130f. The bearing plate 310f is provided with a guiding rod 313f extending outwards. The guiding rod 313f can slide within the arc-shaped slot 131f. The arc-shaped slot 131f is configured to limit a vertical swing distance of the bearing plate 310f.

The drive mechanism 400f is connected to one end of the bearing plate 310f. The drive mechanism 400f can include a third drive member 410f and a connecting block 420f. The third drive member 410f can be an eccentric motor, and the third drive member 410f is connected to the connecting block 420f. The connecting block 420f is indirectly connected to the cover plate (see following introduction to the incubation holder 200f for a specific connection method). When the third drive member 410f drives the connecting block 420f to move forward and backward, the connecting block 420f is capable of driving cover plates to move relative to slides, so as to accelerate reaction between a specimen and a reagent and improve detection efficiency.

An operation process of the incubation apparatus can be as follows: in an initial state, the bearing plate 310f remains parallel to the horizontal plane, and the bearing plate 310f is supported by the two supporting columns 120f and the support plate 130f. In this case, a liquid can be added to gaps between the cover plates and the slides. When the initial state needs to be converted to an incubation state, the output end of the second drive member 321 rotates clockwise, the bearing plate 310f swings downward around the shaft, and correspondingly, the incubation holder 200f synchronously swings downward. When the incubation holder 200f swings downward to the incubation state, the second drive member 321f ceases driving. In this case, a tilt angle of the slides relative to the horizontal plane decreases, so as to reduce a risk of loss of the reagent between the cover plates and the slides from bottoms of the gaps. When the second drive member 321f ceases driving, the drive mechanism 400f can be activated to operate, so as to enable the cover plates to move relative to the slides, allowing uniform mixing of the specimen and the reagent between the cover plates and the slides. Upon completion of uniform mixing, the drive mechanism 400f stops operation, and the output end of the second drive member 321f rotate anticlockwise, so as to drive the incubation holder 200f to swing upward until the bearing plate 310f is parallel to the horizontal plane, at which point the second drive member 321f ceases driving.

When the incubation holder 200f is in the initial state, the incubation holder 200f remains parallel to the horizontal plane, a tilt angle of the bottom plates 240f is set to range from 15° to 90°, and correspondingly, a tilt angle of the slides 230f ranges from 15° to 90°. For example, in the initial state, the incubation holder 200f with inclination of the bottom plates 240f being 35° (an included angle with the horizontal plane) is selected, and correspondingly, inclination of the slides 230f is 35°. In the initial state, the incubation holder 200f with the tilt angle of the bottom plates 240f being 75° is selected, and correspondingly, the tilt angle of the slides 230f is 75°, etc.

It should be noted that, in the initial state, the incubation holder 200f is horizontally placed on the bearing plate 310f of the tilt mechanism 300f (in the initial state, the bearing plate 310f is parallel to the horizontal plane), while the bottom plates 240f, the slides 230f, and the cover plates 220f form a certain included angle relative to the horizontal plane. When the tilt mechanism 300f drives the incubation holder 200f to swing, the incubation holder 200f can be changed from the initial state to the incubation state. In the incubation state, the incubation holder 200f forms a certain included angle with the horizontal plane. In this case, the included angles of the bottom plates 240f, the slides 230f, and the cover plates 220f in the incubation holder 200f relative to the horizontal plane decrease. The tilt angle of the slides 230f relative to the horizontal plane in the incubation state is smaller than that of the slides 230f relative to the horizontal plane in the initial state.

For example, the incubation holder 200d with the tilt angle of the bottom plates 240f being 35° can be selected, and in the initial state, the tilt angle of the slides 230f relative to the horizontal plane is 35°. The incubation holder 200f is driven by the tilt mechanism 300f to swing to the incubation state, in which case the tilt angle of the slides 230f relative to the horizontal plane is 0° (i.e., the slides 230f are parallel to the horizontal plane). It should also be noted that in the incubation state, the tilt angle of the slides 230f relative to the horizontal plane can be 2°, 3°, 4°, etc.

In the present embodiment, through cooperation between the cover plates 220f and the slides 230f in the incubation holder 200f, oblique arrangement of the cover plates 220f and the slides 230f on the holder assembly 210f, and drive connection between the tilt mechanism 300f and the incubation carrier 200f, the tilt mechanism 300f is capable of driving the incubation holder 200f to swing, so as to adjust the inclination of the cover plates 220f and the slides 230f relative to the horizontal plane. In this way, during the incubation, the inclination of the cover plates 220f and the slides 230f can decrease, thereby avoiding loss of the reagent between the cover plates 220f and the slides 230f from the bottoms of the gaps due to excessive tilt angles, saving reagent consumption, eliminating the need to add the reagent multiple times, and improving detection efficiency.

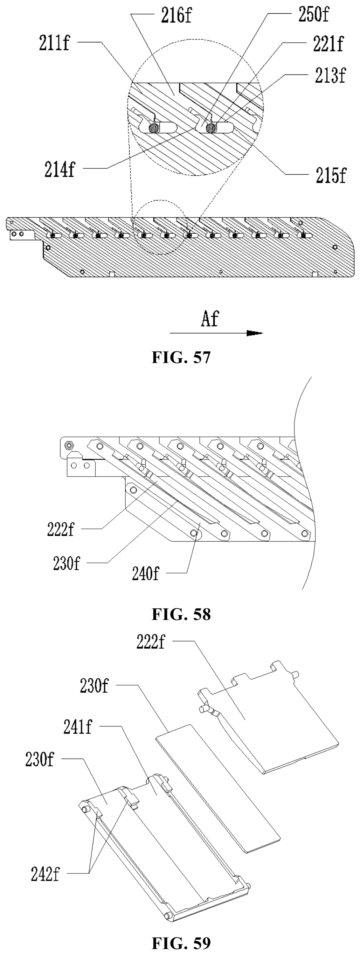

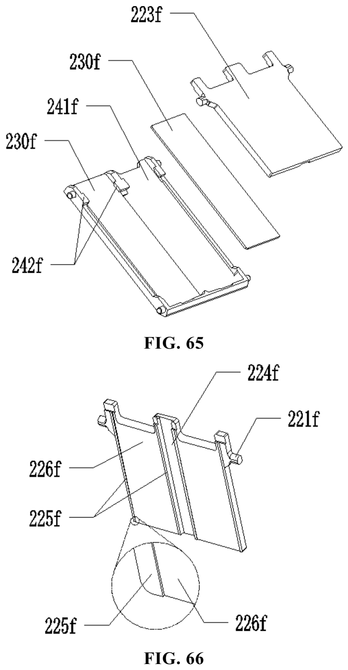

With reference to FIG. 54 to FIG. 66, the incubation holder 200f can include bottom plates 240f, slides 230f, cover plates 220f, a holder assembly 210f, and push rods 250f. The bottom plates 240f are configured to load the slides 230f. The slides 230f are located between respective bottom plates 240f and cover plates 220f. Each cover plate 220f is provided with protruding portions 221f on two sides.

The holder assembly 210f includes a pair of side plates 211f. The bottom plates 240f are connected between the pair of side plates 211f. The side plates 211f are slidably connected to the push rods 250f. Each push rod 250f is provided with grooves 251f, and the protruding portions 221f are provided in respective grooves 251f. Driven by an external force, the push rods 250f are capable of driving the cover plates 220f to move, so as to agitate reagents and tissue specimens between the cover plates 220f and the slides 230f.

A connecting plate 253f is provided between the pair of push rods 250f. The connecting plate 253f can be made from a magnetic metal. By pushing the connecting plate 253f, the pair of push rods 250f is enabled to synchronously move in a first direction Af. The connecting block 420f on the drive mechanism 400f is also magnetic, and the connecting plate 253f and the connecting block 420f can be magnetically attached. The connecting block 420f, when driven by the third drive member 410f, is capable of driving the connecting plate 253f to move forward and backward.

Each side plate 211f is provided with a sliding slot 212f, the push rods 250f are provided in respective sliding slots 212f, and the push rods 250f can reciprocate within the sliding slots 212f. Limiting slots 213f and guiding slots 216f communicating with respective limiting slots 213f are provided in the side plates 211f. The grooves 251f are located below the guiding slots 216f, and in a process of reciprocating sliding of the push rods 250f within the sliding slots 212f, the grooves 251f are capable of communicating with respective guiding slots 216f in a certain position. The guiding slots 216f, the limiting slots 213f, and the grooves 251f can communicate with each other, thus facilitating removal or placement of the protruding portions 221f from or in the limiting slots 213f, the grooves 251f, and the guiding slots 216f, simplifying assembly and disassembly operation of the cover plates 220f, facilitating replacement and washing of the cover plates 220f, and avoiding long-term wear of the cover plates 220f and accumulation of previous reagents or tissue specimens, which affects accuracy of subsequent detection. Widths of the limiting slots 213f, the guiding slots 216f, and the grooves 251f are greater than a diameter of a cylinder, and the cylinder can freely move within the limiting slots 213f, the guiding slots 216f, and the grooves 251f.

With reference to FIG. 54, FIG. 55, and FIG. 61, the holder assembly 210f includes a pair of cross plates 218f and a cross bar 219f. For the pair of cross plates 218f and the cross bar 219f, reference is made to the description in Embodiments 1 to 3 (e.g., the first connecting portion 107 and the second connecting portion 108), which is not repeated herein.

With reference to FIG. 54 to FIG. 66, the incubation holder 200f includes a plurality of bottom plates 240f and a plurality of cover plates 220f, with the bottom plates 240f and the cover plates 220f corresponding on a one-to-one basis. Each bottom plate 240f is provided with a plurality of accommodation grooves 241f and a plurality of protruding limiting blocks 242f. The limiting blocks 242f are provided on two sides of each accommodation groove 241f, and each accommodation groove 241f is configured to load one slide 230f. The limiting blocks 242f are configured to isolate two adjacent slides 230f and restrict movement of the slides 230f in a direction perpendicular to the bottom plates 240f. The limiting blocks 242f can be rectangular, square, or other shapes. Each limiting block 242f can be provided with an inclined surface (not shown) on top, and the inclined surface can guide insertion of the slide 230f into the accommodation groove 241f.

The plurality of cover plates 220f are provided above the plurality of bottom plates 240f, respectively, and a plurality of slides 230f can be inserted into each bottom plate 240f. Respective cover plates 220f and slides 230f are partially attached all the time, and a reagent is added between the slides 230f and the cover plates 220f.

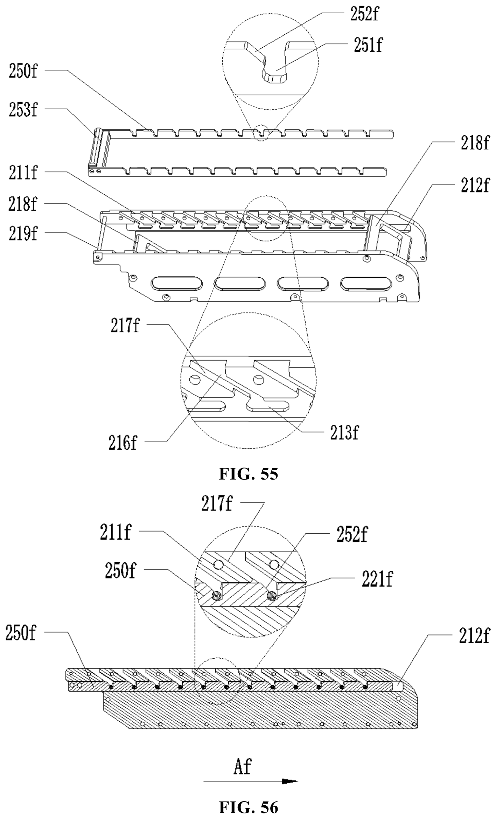

With reference to FIG. 55 to FIG. 60, in an embodiment, the cover plates 220f are arc-shaped plates 222f. As the push rods 250f are driven by an external force to slide in the first direction Af, the protruding portions 221f are forced to move along first ends 214f of the limiting slots 213f towards second ends 215f, upper parts of the arc-shaped plates 222f are gradually separated from the slides 230f, while lower parts of the cover plates 220f perform an opposite attachment movement in a seesaw-like manner, and the cover plates 220f are partially attached to the slides 230f all the time. As the push rods 250f are driven by an external force to slide in a direction opposite to the first direction Af, the protruding portions 221f are forced to move along the second ends 214f of the limiting slots 215f towards the first ends 214f, upper parts of the cover plates 220f are gradually attached to the slides 230f, while lower parts of the cover plates 220f perform an opposite separation movement in the seesaw-like manner, and the cover plates 220f are partially attached to the slides 230f all the time.

Use of the arc-shaped plates 222f is more beneficial to promote a large-scale reciprocation of the reagent on the slides 230f, thus enhancing an effect of dynamic incubation, and shortening an incubation period, with relatively high detection sensitivity. Furthermore, by controlling a distance of reciprocation of a push-pull assembly by an external force, a range of attachment between the arc-shaped plates 222f and the slides 230f can be controlled, thus reducing an area covered by the reagent on the slides 230f, reducing reagent consumption, and saving costs particularly when performing, for example, fluorescence *in situ* hybridization or using other expensive reagents.

Herein, the grooves 251f can be shaped similarly to an inverted letter R. An opening of each groove 251f is provided with an inclined surface 252f extending downward, where the inclined surface 252f is capable of connecting to a guiding surface 217f of the guiding slot 216f, thus facilitating entry and exit of the protruding portion 221f into and from the groove 251f and the limiting slot 213f along the guiding surface 217f and the inclined surface 252f.

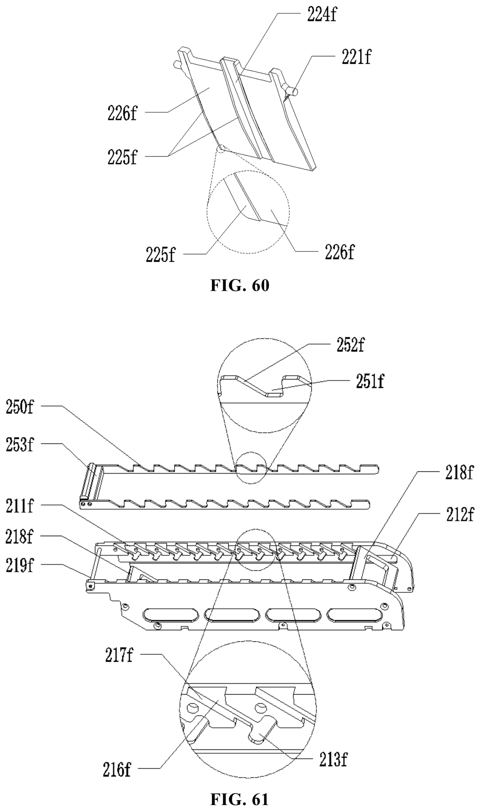

With reference to FIG. 61 to FIG. 66, in an embodiment, the cover plates 220f are straight plates 223f. As the push rods 250f are driven by an external force to slide in the first direction Af, the protruding portions 221f are forced to move along the first ends 214f of the limiting slots 213f towards the second ends 215f, thereby increasing the openings between the cover plates 220f and the slides 230f. As the push rods 250f are driven by an external force to slide in a direction opposite to the first direction Af, the protruding portions 221f are forced to move along the second ends 215f of the limiting slots 213f towards the first ends 214f, thereby decreasing the openings between the cover plates 220f and the slides 230f. Herein, the grooves 251f can be shaped similarly to an inverted right trapezoid, and each groove 251f is provided with the inclined surface 252f extending downward at the opening.

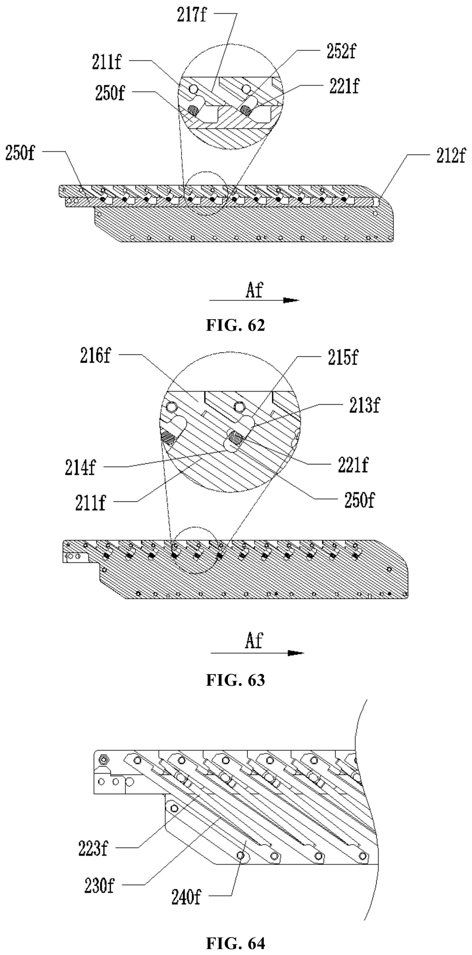

With reference to FIG. 62 to FIG. 66, each cover plate 220f is provided with a plurality of capillary planes 226f and a plurality of convex strips 225f. The convex strips 225f are provided on two side edges of the capillary planes 226f, and the convex strips 225f extend from tops of the capillary planes 226f to bottoms. Through abutment of the convex strips 225f against the slides 230f, gaps are formed between the cover plates 220f and the slides 230f. An isolation portion 224f is provided between two adjacent capillary planes 226f, and the isolation portion 224f can prevent reagent overflow between two adjacent slides 230f, thereby avoiding cross contamination between reagents and improving detection accuracy.

It should be noted that, in other embodiments, the incubation holder 200f also can adopt structures of the incubation holders 1, 1a, 1b, and 1c in Embodiment 1 to Embodiment 4.

The above-mentioned are only for preferred embodiments of the present invention, and are not intended to limit the present invention. For those skilled in the art, various changes and modifications could be made to the present invention. Any modifications, equivalent substitutions, improvements, etc. made within the spirit and principle of the present invention should be covered within the scope of protection of the present invention.

## Claims

1. An incubation holder, capable of loading slides, **characterized by** comprising a holder assembly, and bottom plates and cover plates obliquely provided on the holder assembly, wherein the bottom plates are configured to load the slides located between the bottom plates and the cover plates; and the cover plates slide against the slides, or the cover plates perform opening and closing movement relative to the slides, so as to uniformly mix a reagent between the cover plates and the slides.

2. The incubation holder according to claim 1, **characterized in that**, the incubation holder further comprises a pair of pushers, the holder assembly comprises a pair of side plates, the pair of pushers is slidably connected to the pair of side plates, respectively, and the bottom plates and the cover plates are connected between the pair of side plates;
the cover plates are each provided with protruding portions at upper ends, wherein the protruding portions are detachably connected to the pair of pushers, respectively;
the side plates are each provided with limiting slots, wherein the limiting slots are each provided with a first support surface;
the pushers are each provided with movement slots, wherein the movement slots are each provided with a second support surface, the first support surface and the second support surface are provided crossed, and the protruding portion is capable of being supported at an intersection of the first support surface and the second support surface;
the pushers are capable of sliding in a first direction under an external force, forcing the protruding portions to move upward along the intersection of the first support surface and the second support surface, so as to increase openings between the cover plates and the slides; and the pushers are capable of sliding in a second direction under an external force, forcing the protruding portions to move downward along the intersection of the first support surface and the second support surface, so as to decrease the openings between the cover plates and the slides.

3. The incubation holder according to claim 1, **characterized by** further comprising a pair of pushers, wherein the holder assembly comprises a pair of side plates, the pair of pushers is slidably connected to the pair of side plates, respectively, and the bottom plates and the cover plates are connected between the pair of side plates;
the side plates are each provided with limiting slots;
the cover plates are each provided with protruding portions at upper ends, wherein the protruding portions are pivotally connected to the pair of pushers, respectively, wherein
the pushers are capable of reciprocatingly slide in a first direction under an external force, forcing the protruding portions to reciprocate along first ends of the limiting slots towards second ends, so as to increase or decrease openings between the cover plates and the slides.

4. The incubation holder according to claim 1, **characterized by** further comprising a pair of pushers, wherein the holder assembly comprises a pair of side plates, the pair of pushers is slidably connected to the pair of side plates, respectively, and the bottom plates and the cover plates are connected between the pair of side plates; and the side plates are each provided with first limiting slots, wherein the first limiting slots each have two inner side walls arranged in parallel;
the cover plates are each provided with protruding portions at upper ends, wherein the protruding portions are pivotally connected to the pair of pushers, respectively, and the cover plates are provided to be attached to the slides, wherein
the pushers are capable of reciprocatingly sliding in a first direction under an external force, forcing the protruding portions to reciprocate on the inner side walls, and the cover plates move against the slides, and the cover plates reciprocatingly slide along a length direction of the slides.

5. The incubation holder according to claim 1, **characterized in that**, the holder assembly comprises an upper holder and a lower holder;
two sides of an upper part of the bottom plates are connected to the upper holder, and two sides of a lower part of the bottom plates are connected to the lower holder;
the cover plates are correspondingly provided at one side of the bottom plates, and two sides of an upper part of the cover plates are connected to the upper holder, and lower parts of the cover plates are capable of being attached to surfaces of the slides, wherein
the upper holder is capable of moving relative to the lower holder under an external force, allowing the upper holder and the lower holder to be gradually separated from each other or approach toward each other, so as to increase or decrease openings between the cover plates and the slides.

6. The incubation holder according to any one of claims 2-5, **characterized in that**, the incubation holder is provided with at least two bottom plates, and each of the bottom plates loads at least one of the slides, each of the bottom plates is correspondingly provided with one of the cover plates, and the bottom plates are arranged in an array in the first direction.

7. The incubation holder according to any one of claims 2-5, **characterized in that**, the bottom plates are each provided with a first isolation portion, wherein the first isolation portion is configured to isolate and limit two adjacent slides; and the cover plates are each provided with a second isolation portion, wherein the second isolation portion is configured to isolate reagents on two adjacent slides.

8. The incubation holder according to any one of claims 2-5, **characterized in that**, the cover plates are each provided with a support platform protruding therefrom, wherein when a surface of the support platform is attached to the slide, a capillary gap is formed between the cover plate and the slide.

9. An incubation apparatus, **characterized by** comprising
the incubation holder according to any one of claims 1-8;
a pedestal;
a tilt mechanism, provided on the pedestal, drivingly connected to the holder assembly, and configured to drive the holder assembly to swing, so as to adjust tilt angles of the bottom plates, the cover plates, and the slides relative to a horizontal plane.

10. An incubator, **characterized by** comprising:
a housing mechanism, provided with a mounting cavity;
a drive mechanism, comprising a drive member and a follower, wherein the drive member is drivingly connected to the follower;
an incubation mechanism, comprising a support assembly and the incubation holder according to any one of claims 1-8, wherein the support assembly is connected to inner walls of the mounting cavity; and the support assembly comprises an incubation pot provided with an incubation tank, wherein the incubation holder is provided in the incubation tank, wherein
the cover plates are in transmission connection with the follower; and the drive member is capable of driving the follower to move, so as to drive the cover plates to move relative to the slides.

11. The incubator according to claim 10, **characterized in that**, the support assembly is movably connected to the inner walls of the mounting cavity in a pushable-pullable manner.

12. The incubator according to claim 10, **characterized in that**, the support assembly comprises at least two incubation pots, wherein the respective incubation pots being arranged side by side, and each of the incubation pots is capable of loading at least one of the incubation holders.

13. A staining device, **characterized by** comprising:
a machine bench;
the incubator according to any one of claims 10-12; and
a tilt mechanism, provided on the machine bench, drivingly connected to the incubator, and being capable of driving the incubator to swing downward, so as to decrease tilt angles of the holder assembly, the cover plates, the bottom plates, and the slides relative to a horizontal plane.

14. The staining device according to claim 13, **characterized by** further comprising a mechanical arm, sampling needles, and reagent bottles, wherein the mechanical arm and the reagent bottles are provided on the machine bench, the mechanical arm is connected to the sample needles; and the mechanical arm is capable of driving the sampling needles to move, and the sampling needles are capable of aspirating reagents in the reagent bottles and adding the same dropwise into gaps between the cover plates and the slides.

15. A staining method, **characterized in that**, the staining method is applied to the staining device according to any one of claims 13-14, comprising:
adding a liquid into gaps between the cover plates and the slides;
driving, by the tilt mechanism, the incubator to swing downward to an incubation state, and the tilt mechanism ceasing driving;
the cover plates moving relative to the slides, so as to uniformly mix the liquid between the cover plates and the slides; and
driving, by the tilt mechanism, the incubator to swing upward until the incubator is parallel to the horizontal plane, and the tilt mechanism ceasing driving.
